# EUROPEAN PATENT APPLICATION

(11) **EP 4 692 101 A1**
(43) Date of publication of application: **11.02.2026**
(21) Application number: 24779921.6
(22) Date of filing: 22.03.2024
(51) Int. Cl.: C07F 17/02, C07B 49/00, C07B 53/00

(54) **DIPHOSPHINE-DIBORANE COMPLEX AND METHOD FOR PRODUCING SAME**

(30) Priority: 24.03.2023 JP 2023048039
(71) Applicant: Takasago International Corporation, Tokyo 144-8721 (JP)
(72) Inventor: NAKAYAMA, Yuji, Hiratsuka-shi, Kanagawa 254-0073 (JP); YUKI, Yamato, Hiratsuka-shi, Kanagawa 254-0073 (JP); HARABE, Takumi, Hiratsuka-shi, Kanagawa 254-0073 (JP); SAKAGUCHI, Kazuhiko, Hiratsuka-shi, Kanagawa 254-0073 (JP); TAMAKI, Nao, Hiratsuka-shi, Kanagawa 254-0073 (JP)
(74) Representative: Hoffmann Eitle
(86) International application number: PCT/JP2024/011200
(87) International publication number: WO 2024/203802

(57) **Abstract**

The present invention pertains to: a stable equivalent of 2,2"-bis(1-phosphinoethyl)-1,1"-biferrocene or the like that is useful as a ligand in various catalytic reactions but is difficult to synthesize or isolate and purify; and a method for efficiently producing the stable equivalent. The present invention provides: a diphosphine-diborane complex represented by general formula (1·(BH₃)₂); and a method that is for producing the diphosphine-diborane complex, and that comprises sequentially reacting a magnesium source and an oxidizing agent with a phosphine-borane complex.

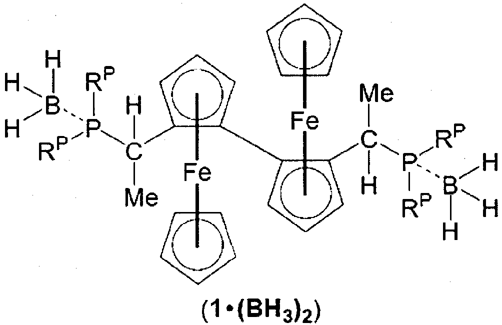

## Description

### Technical Field

The present invention relates to a novel diphosphine-diborane complex that functions as a stable equivalent of 2,2''-bis(1-phosphinoethyl)-1,1"-biferrocene, which is useful as a ligand for various catalytic reactions including the asymmetric hydrogenation of aromatics, but is difficult to synthesize, isolate, or purify. The present invention also relates to an efficient production method of the complex.

### Background Art

Optically active cyclic compounds are of great importance as pharmaceuticals, agrochemicals, functional materials, fragrances, and synthetic intermediates. Accordingly, intensive research and development efforts continue to be directed toward their production methods. Among such methods, the catalytic asymmetric hydrogenation of aromatic compounds or heteroaromatic compounds, referred to as the asymmetric hydrogenation of aromatics, offers several advantages, including the ability to simultaneously introduce multiple chiral carbon centers into a target molecule, as well as excellent atom economy and the potential for significant reduction of waste. Therefore, the asymmetric hydrogenation of aromatics is not only useful as the production method of optically active cyclic compounds, but has also become one of the particularly important catalytic reactions from the perspectives of recently emphasized SDGs and Green Chemistry.

For the practical application of the asymmetric hydrogenation of aromatics, it is essential to employ chiral ligands that are not only easy to produce but also exhibit excellent catalytic activity, asymmetric induction ability, substrate generality, and air stability. Accordingly, intensive efforts have been made over many years to develop such ligands. Among these ligands, 2,2''-bis[1-(diphenylphosphino)ethyl]-1,1''-biferrocene (commonly known as Ph-TRAP, Patent Literature 1 and Non Patent Literature 1), a rare trans-chelating diphosphine compound developed by Ito, Sawamura, and their colleagues in 1991, was later found by Kuwano and his colleagues in 2000 to function as a ligand for the asymmetric hydrogenation of aromatics, exhibiting particularly excellent substrate generality (Non Patent Literature 2).

For example, various aromatic compounds or heteroaromatic compounds such as naphthalenes, pyrroles, imidazoles, oxazoles, indoles, azaindoles, quinolines, and isoquinolines can be catalytically hydrogenated by using Ph-TRAP as a chiral ligand, enabling the highly efficient synthesis of optically active cyclic compounds (Non Patent Literatures 3 and 4). In light of this background, extensive research has also been conducted on the synthesis of Ph-TRAP and its derivatives, namely 2,2''-bis(1-phosphinoethyl)-1,1"-biferrocenes (hereinafter referred to as R^{P}-TRAP), and a variety of synthesis methods have been reported to date (Non Patent Literatures 5 to 9). R^{P}-TRAP developed as described above, has applied not only to the asymmetric hydrogenation of aromatics, but also to the asymmetric addition of alkynes to aldehydes by Sawamura and his colleagues (Non Patent Literature 8) (for reference, the stereochemical structure of typical optically active forms of R^{P}-TRAP are shown in Formula 1 below, and a schematic diagram of the asymmetric hydrogenation of aromatics using the optically active Ph-TRAP as a chiral ligand is shown in Formula 2 below).

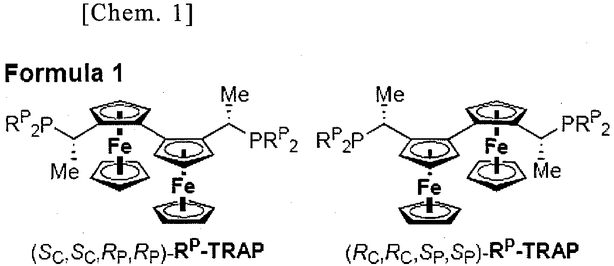

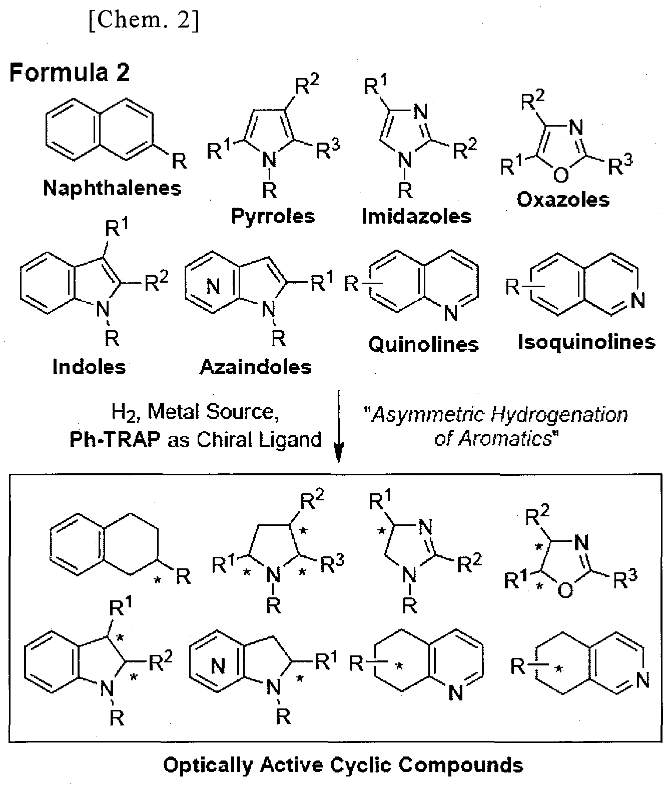

### Citation List

### Patent Literature

Patent Literature 1: JP-A-H04-283596

### Non Patent Literature

Non Patent Literature 1: Masaya Sawamura, Hitoshi Hamashima, and Yoshihiko Ito, Tetrahedron Asymmetry, 1991, 7(2), 593-596.
Non Patent Literature 2: Ryoichi Kuwano, Koji Sato, Takashi Kurokawa, Daisuke Karube, and Yoshihiko Ito, J. Am. Chem. Soc., 2000, 122(31), 7614-7615.
Non Patent Literature 3: Ryoichi Kuwano, J. Synth. Org. Chem., Jpn., 2007, 65(2), 109-118.
Non Patent Literature 4: Ryoichi Kuwano, J. Synth. Org. Chem., Jpn., 2021, 79(12), 1125-1135.
Non Patent Literature 5: Masaya Sawamura, Hitoshi Hamashima, Masanobu Sugawara, Ryoichi Kuwano, and Yoshihiko Ito, Organometallics, 1995, 14(10), 4549-4558.
Non Patent Literature 6: Ryoichi Kuwano, Masaya Sawamura, Satoshi Okuda, Tomohito Asahi, Yoshihiko Ito, Martin Redon, and Alain Krief, Bull. Chem. Soc. Jpn., 1997, 70(11), 2807-2822.
Non Patent Literature 7: Ryoichi Kuwano, and Masaya Sawamura, Catalysts for Fine Chemical Synthesis: Vol. 5, Regio- and Stereo-Controlled Oxidations and Reductions, Wiley, Chichester, 2007, 73-86.
Non Patent Literature 8: Yohsuke Asano, Hajime Ito, Kenji Hara, and Masaya Sawamura, Organometallics, 2008, 27(22), 5984-5996.
Non Patent Literature 9: Michael A. Schmidt, Eric M. Simmons, Carolyn S. Wei, Hyunsoo Park, and Martin D. Eastgate, J. Org. Chem., 2018, 83(7), 3928-3940.

### Summary of Invention

### Technical Problem

As mentioned above, R^{P}-TRAP has proven useful as a ligand for various catalytic reactions including the asymmetric hydrogenation of aromatics, and various applied studies have been actively pursued to date. However, the conventional synthesis methods (Non Patent Literatures 5 to 9) still suffer from numerous critical drawbacks, as shown in Formula 3 below. Specifically, these methods require modification of the synthetic route depending on the structure of the substituent R^{P} on the phosphorus atom (Step 2/Step 2'). In addition, they involve the use of industrially impractical reagents and solvents such as mutagenic iodomethane (Step 2), complicated to prepare and unstable lithium diarylphosphinites (Step 3), highly concentrated hydrogen peroxide with explosion risks (Step 3'), various heavy metals including copper, nickel, and zinc (Step 4), and trichlorosilane with complicated handling and post-treatment (Step 5). Furthermore, R^{P}-TRAP synthesized by the conventional methods must be purified by column chromatography using benzene (Step 6), a highly carcinogenic substance, as an eluent in order to remove impurities generated in Step 5. Moreover, depending on its structure, R^{P}-TRAP can exist not only as a relatively stable powder but also in unstable forms such as viscous liquids or amorphous substances, thereby making the industrial production by the conventional synthesis methods extremely difficult.

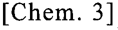

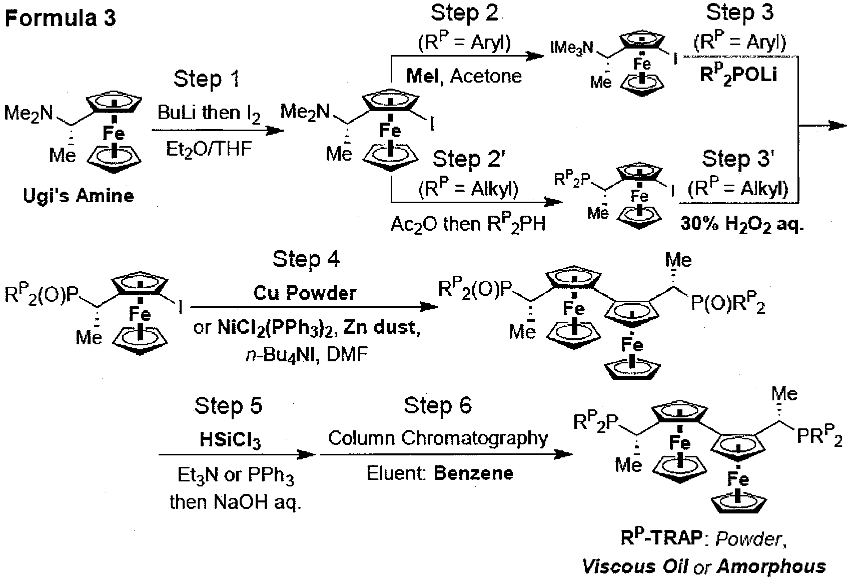

The present invention has been made in light of the foregoing circumstances. Specifically, the present invention provides a stable equivalent of R^{P}-TRAP and an efficient production method thereof, with a view to promoting the practical application and further optimization of various catalytic reactions, including the asymmetric hydrogenation of aromatics. More preferably, the present invention provides the stable equivalent of R^{P}-TRAP, which offers various advantages including: 1) easy production using reagents and solvents suitable for industrial use; 2) excellent crystallinity and air stability; and 3) facile isolation, purification, and long-term storage; and provides the efficient production method thereof.

### Solution to Problem

The present inventors, while considering solutions to the aforementioned problems, focused on the well-known phenomenon that the reaction of phosphine compounds with a borane source leads to the formation of phosphine-borane complexes exhibiting excellent crystallinity and air stability. Thus, although the diphosphine compound R^{P}-TRAP is difficult to handle, its conversion into R^{P}-TRAP·(BH₃)₂, a previously unknown diphosphine-diborane complex, is expected to significantly improve its various physical properties. However, as shown in Formula 4 below, even if R^{P}-TRAP ·(BH₃)₂ were to be formed by reacting a borane source with R^{P}-TRAP, whose synthesis is inherently difficult, the synthetic problems associated with the conventional methods would remain entirely unresolved. Therefore, to the best of the inventors' knowledge, no such attempt has ever been reported in the literature to date.

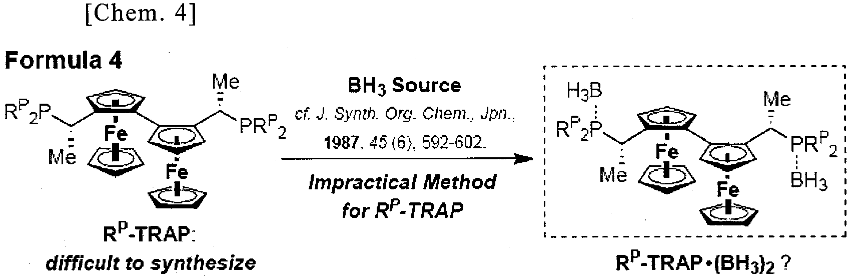

In light of the foregoing background, the inventors focused on Ph-TRAP, which has particularly active applied research among R^{P}-TRAPs, and initiated investigations aimed at addressing the aforementioned problems. As a result, a novel method was established that enables the direct production of Ph-TRAP·(BH₃)₂, the diborane complex of Ph-TRAP, without using the synthetically challenging Ph-TRAP itself. Specifically, this production method involves sequentially reacting {1-bromo-2-[1-(diphenylphosphino-κP)ethyl]ferrocene}trihydroboron (hereinafter referred to as Ph-PEF-Br·BH₃), a key intermediate that can be synthesized in three steps from commercially available N,N-dimethyl-1-ferrocenylethylamine (commonly known as Ugi's Amine), with a magnesium source and an oxidizing agent, followed by treatment with a small amount of a borane source (for reference, the outline of the production method of optically active Ph-TRAP·(BH₃)₂ is shown in Formula 5 below, but the present invention is not limited thereto).

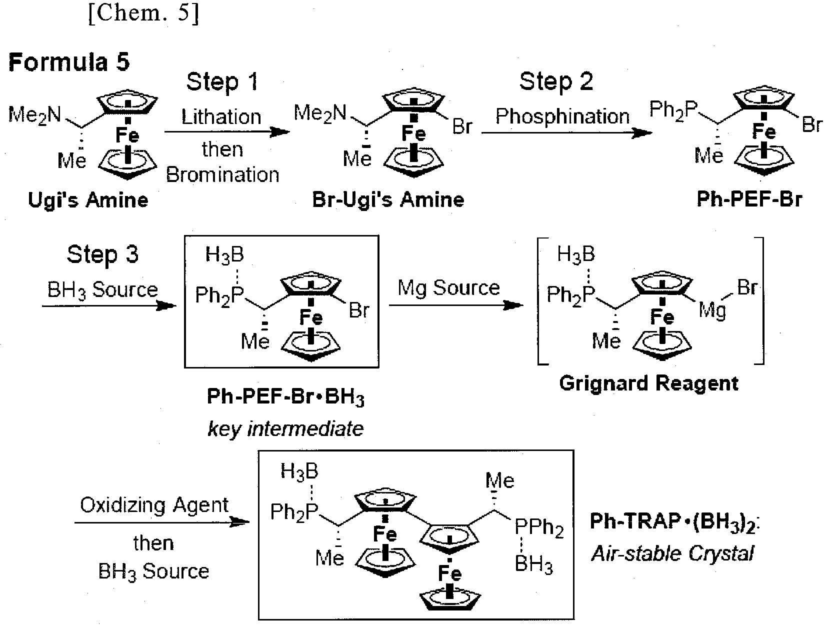

This production method eliminates the need for industrially unsuitable reagents and solvents that posed challenges in the conventional methods, such as iodomethane, lithium diphenylphosphinite, highly concentrated hydrogen peroxide, various heavy metals, trichlorosilane, and benzene. In addition, Ph-TRAP·(BH₃)₂, the novel diphosphine-diborane complex obtained by the present method, exhibited excellent crystallinity and air stability, as expected, and was found to be readily isolable, easily purifiable, and capable of long-term storage.

The inventors also found that Ph-TRAP·(BH₃)₂ can be rapidly converted to Ph-TRAP by treatment with a borane-dissociating agent; in other words, Ph-TRAP·(BH₃)₂ functions as a stable equivalent of Ph-TRAP (for reference, the outline of the reaction of optically active Ph-TRAP·(BH₃)₂ with a borane-dissociating agent is shown in Formula 6 below, but the present invention is not limited thereto).

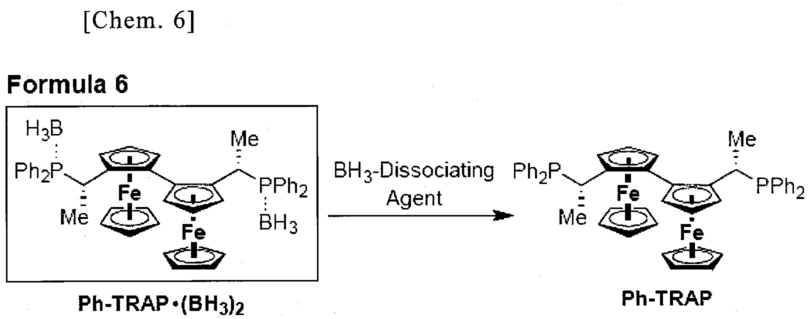

Furthermore, this production method can be carried out regardless of the structure of substituent R^{P} on the phosphorus atom, in contrast to the conventional synthesis methods. Therefore, it has been demonstrated that Tol-TRAP·(BH₃)₂, in which R^{P} is a 4-methylphenyl group, and Cy-TRAP·(BH₃)₂, in which R^{P} is a cyclohexyl group, can be produced in the same manner as Ph-TRAP·(BH₃)₂, in which R^{P} is a phenyl group. These diphosphine-diborane complexes could also be converted into Tol-TRAP and Cy-TRAP, the novel diphosphine compounds which have not been synthesized by the conventional methods, by the action of a borane-dissociating agent. Building upon these fundamental findings, the inventors conducted further studies and completed the present invention (for reference, the stereochemical structures of optically active Tol-TRAP·(BH₃)₂ and Cy-TRAP·(BH₃)₂ are shown in Formula 7 below, but the present invention is not limited thereto).

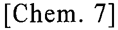

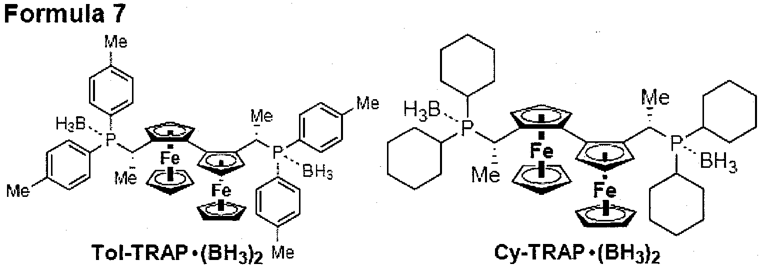

Specifically, the present invention includes the following [1] to [9].
[1] A diphosphine-diborane complex represented by the following general formula (1·(BH₃)₂). 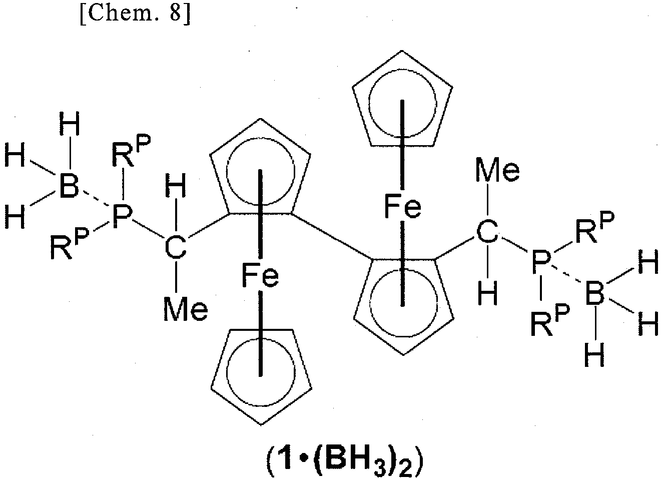 [Wherein,
   a solid line represents a single bond, and a dashed line represents a coordinate bond;
   H represents a hydrogen atom, B represents a boron atom, C represents a carbon atom, and P represents a phosphorus atom;
   Me represents a methyl group;
   Fe represents a divalent iron ion, a pentagon containing a circle represents a cyclopentadienyl anion, and a bold line represents six-electron donation of the cyclopentadienyl anion to Fe;
   R^{P} represents a group selected from the group consisting of an alkyl group, a cycloalkyl group, a heteroaryl group, and an aryl group which may have a substituent.]
[2] The diphosphine-diborane complex according to the above [1], which is an optically active form.
[3] The diphosphine-diborane complex according to the above [1] or [2], wherein R^{P} is selected from the group consisting of a cycloalkyl group and an aryl group which may have a substituent.
[4] A production method of the diphosphine-diborane complex according to any one of the above [1] to [3], comprising a sequential reaction of a phosphine-borane complex represented by the following general formula (2·BH₃) 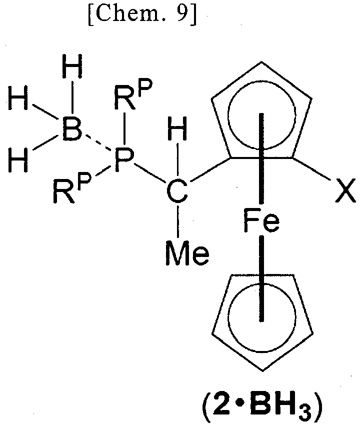 [Wherein,
   a solid line represents a single bond, and a dashed line represents a coordinate bond;
   H represents a hydrogen atom, B represents a boron atom, C represents a carbon atom, and P represents a phosphorus atom;
   Me represents a methyl group, and X represents a halogeno group;
   Fe represents a divalent iron ion, a pentagon containing a circle represents a cyclopentadienyl anion, and a bold line represents six-electron donation of the cyclopentadienyl anion to Fe;
   R^{P} represents a group selected from the group consisting of an alkyl group, a cycloalkyl group, a heteroaryl group, and an aryl group which may have a substituent.]
   with a magnesium source and an oxidizing agent.
[5] The production method according to the above [4], wherein the phosphine-borane complex represented by the general formula (2·BH₃) is an optically active form.
[6] The production method according to the above [4] or [5], wherein R^{P} is selected from the group consisting of a cycloalkyl group and an aryl group which may have a substituent.
[7] The production method according to any one of the above [4] to [6], wherein X is a bromo group.
[8] The production method according to any one of the above [4] to [7], wherein the magnesium source is metallic magnesium.
[9] The production method according to any one of the above [4] to [8], wherein the oxidizing agent is iron(III) acetylacetonate.

### Advantageous Effects of Invention

The novel diphosphine-diborane complex represented by the general formula (1·(BH₃)₂) described above (hereinafter referred to as R^{P}-TRAP·(BH₃)₂ (1·(BH₃)₂)) can be readily produced without using the synthetically challenging R^{P}-TRAP (1) itself, by sequentially reacting a phosphine-borane complex represented by the general formula (2·BH₃) (hereinafter referred to as R^{P}-PEF-X·BH₃ (2·BH₃)) with a magnesium source and an oxidizing agent, if necessary, followed by treatment with a borane source. Furthermore, according to a preferred embodiment of the present invention, R^{P}-TRAP·(BH₃)₂ (1·(BH₃)₂) exhibits excellent crystallinity and air stability, facilitates isolation, purification, and long-term storage, and can be readily converted into R^{P}-TRAP by treatment with a borane-dissociating agent. Accordingly, the present invention can contribute to the practical application and further improvement in efficiency of various catalytic reactions, including the asymmetric hydrogenation of aromatics which is useful for the production of optically active cyclic compounds.

### Brief Description of Drawings

[FIG. 1] FIG. 1 shows the result of X-ray crystallography (thermal ellipsoid plot; 50% probability level) of (S_{C},R_{P})-Ph-PEF-Br·BH₃ produced in Example 1 below.
[FIG. 2] FIG. 2 shows the result of X-ray crystallography (thermal ellipsoid plot; 50% probability level) of (S_{C},R_{P})-Tol-PEF-Br·BH₃ produced in Example 2 below.
[FIG. 3] FIG. 3 shows the result of X-ray crystallography (thermal ellipsoid plot; 50% probability level) of (S_{C},R_{P})-Cy-PEF-Br·BH₃ produced in Example 3 below.
[FIG. 4] FIG. 4 shows the result of X-ray crystallography (thermal ellipsoid plot; 50% probability level) of (S_{C},S_{C},R_{P},R_{P})-Ph-TRAP·(BH₃)₂ produced in Example 4 below.
[FIG. 5] FIG. 5 shows the result of X-ray crystallography (thermal ellipsoid plot; 50% probability level) of (R_{C},R_{C},S_{P},S_{P})-Ph-TRAP·(BH₃)₂ produced in Example 5 below.
[FIG. 6] FIG. 6 shows the result of X-ray crystallography (thermal ellipsoid plot; 50% probability level) of (S_{C},S_{C},R_{P},R_{P})-Tol-TRAP produced in Example 9 below.
[FIG. 7] FIG. 7 shows the result of X-ray crystallography (thermal ellipsoid plot; 50% probability level) of (S_{C},S_{C},R_{P},R_{P})-Cy-TRAP produced in Example 10 below.
[FIG. 8] FIG. 8 shows the ¹H NMR (left side) and ³¹P NMR (right side) spectrum charts of (SC,S_{C},R_{P},R_{P})-Ph-TRAP·(BH₃)₂ produced in Example 4 below, measured in deuterated dichloromethane after being exposed to air at room temperature for 6 months.

### Description of Embodiments

Hereinafter, R^{P}-TRAP·(BH₃)₂ (1·(BH₃)₂) according to the present invention is described in detail. In the general formula (1·(BH₃)₂) described above: a solid line represents a single bond, and a dashed line represents a coordinate bond; H represents a hydrogen atom, B represents a boron atom, C represents a carbon atom, and P represents a phosphorus atom; Me represents a methyl group; Fe represents a divalent iron ion, a pentagon containing a circle represents a cyclopentadienyl anion, and a bold line represents six-electron donation of the cyclopentadienyl anion to Fe; All four R^{P}s are identical and represent a group selected from the group consisting of an alkyl group, a cycloalkyl group, a heteroaryl group, and an aryl group which may have a substituent, preferably represent a group selected from the group consisting of a cycloalkyl group and an aryl group which may have a substituent.

The alkyl group, the cycloalkyl group, the heteroaryl group, and the aryl group which may have a substituent in R^{P} are described in more detail. The alkyl group in R^{P} may be linear or branched; examples thereof include an alkyl group having 1 to 12 carbon atoms, preferably an alkyl group having 1 to 8 carbon atoms, and more preferably an alkyl group having 1 to 4 carbon atoms; specific examples thereof include a methyl group, an ethyl group, an n-propyl group, an isopropyl group, an n-butyl group, a sec-butyl group, an isobutyl group, and a tert-butyl group.

The cycloalkyl group in R^{P} may be monocyclic or polycyclic; examples thereof include a cycloalkyl group having 3 to 20 carbon atoms, preferably a cycloalkyl group having 3 to 15 carbon atoms, and more preferably a cycloalkyl group having 3 to 10 carbon atoms; specific examples thereof include a cyclopropyl group, a cyclobutyl group, a cyclopentyl group, a cyclohexyl group, a 1-adamantyl group, and a 2-adamantyl group; preferred specific examples thereof include a cyclohexyl group.

Examples of the heteroaryl group in R^{P} include a heteroaryl group derived from a 5-membered aromatic heterocycle containing an oxygen atom or a sulfur atom; specific examples thereof include a 2-furyl group, a 3-furyl group, a 2-thienyl group, and a 3-thienyl group.

Examples of the aryl group in R^{P} include an aryl group having 6 to 18 carbon atoms, preferably an aryl group having 6 to 14 carbon atoms, and more preferably an aryl group having 6 to 10 carbon atoms; specific examples thereof include a phenyl group, a 1-naphthyl group, and a 2-naphtyl group; preferred specific examples thereof include a phenyl group. In addition, the aryl group may have a substituent.

Examples of the substituent that the aryl group in R^{P} may have include an alkyl group, a halogenoalkyl group, an aryl group, an alkoxy group, a dialkylamino group, and a halogeno group. Examples of the alkyl group in these substituents include an alkyl group similar to those detailed in the description of R^{P}; preferred specific examples thereof include a methyl group. Examples of the halogenoalkyl group in these substituents include a halogenoalkyl group formed by substituting at least one hydrogen atom on the alkyl group described above with a halogen atom; specific examples thereof include a trifluoromethyl group. Examples of the aryl group in these substituents include an aryl group similar to those detailed in the description of R^{P}; specific examples thereof include a phenyl group. The alkoxy group in these substituents may be linear or branched; examples thereof include an alkoxy group having 1 to 12 carbon atoms, preferably an alkoxy group having 1 to 8 carbon atoms, and more preferably an alkoxy group having 1 to 4 carbon atoms; specific examples thereof include a methoxy group, an ethoxy group, an n-propoxy group, an isopropoxy group, an n-butoxy group, a sec-butoxy group, an isobutoxy group, and a tert-butoxy group. Examples of the dialkylamino group in these substituents include a dialkylamino group formed by substituting two hydrogen atoms on an amino group with the alkyl group described above; specific examples thereof include an N,N-dimethylamino group. Specific examples of the halogeno group in these substituents include a fluoro group, a chloro group, a bromo group, and an iodo group.

R^{P}-TRAP·(BH₃)₂ (1·(BH₃)₂) according to the present invention has two carbon-centered chiral structures (hereinafter, the absolute configurations of these carbon-centered chiral structures are represented by R_{C} or Sc) and two planar chiral structures (hereinafter, the absolute configurations of these planar chiral structures are represented by R_{P} or S_{P}). Accordingly, the present compound may be either a mixture of stereoisomers arising from these chiral structures or a single stereoisomer; however, from the viewpoint of application to the asymmetric hydrogenation of aromatics, the single stereoisomer, i.e., the optically active form, is preferred. Specific examples of preferred form of optically active R^{P}-TRAP·(BH₃)₂ (1·(BH₃)₂) include (S_{C},S_{C},R_{P},R_{P})-R^{P}-TRAP·(BH₃)₂ and (R_{C},R_{C},S_{P},S_{P})-R^{P}-TRAP·(BH₃)₂ due to their structural requirements, whose stereochemical structures are shown in Formula 8 below (in accordance with convention, the carbon atom (C) and the hydrogen atom (H) bonded to carbon atom are omitted in the drawings of stereochemical structures herein; a solid wedge line represents a carbon-carbon bond projecting toward the viewer, while a dashed wedge line represents a carbon-carbon bond extending away from the viewer).

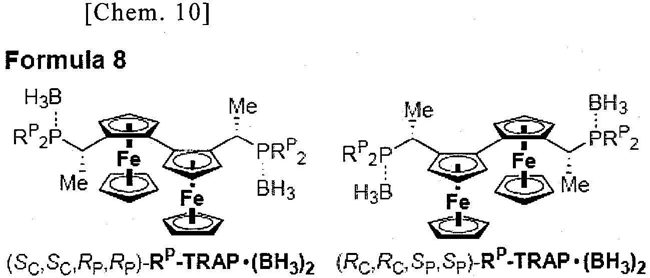

Particularly preferred specific examples of R^{P}-TRAP·(BH₃)₂ (1·(BH₃)₂) according to the present invention include (Sc,Sc,R_{P},R_{P})-Ph-TRAP·(BH₃)₂, (R_{C},R_{C},S_{P},S_{P})-Ph-TRAP·(BH₃)₂, (S_{C},S_{C},R_{P},R_{P})-Tol-TRAP·(BH₃)₂, (R_{C},R_{C},S_{P},S_{P})-Tol-TRAP·(BH₃)₂, (S_{C},S_{C},R_{P},R_{P})-Cy-TRAP ·(BH₃)₂, and (R_{C},R_{C},S_{P},S_{P})-Cy-TRAP·(BH₃)₂, whose stereochemical structures are shown in Formula 9 below. 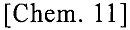 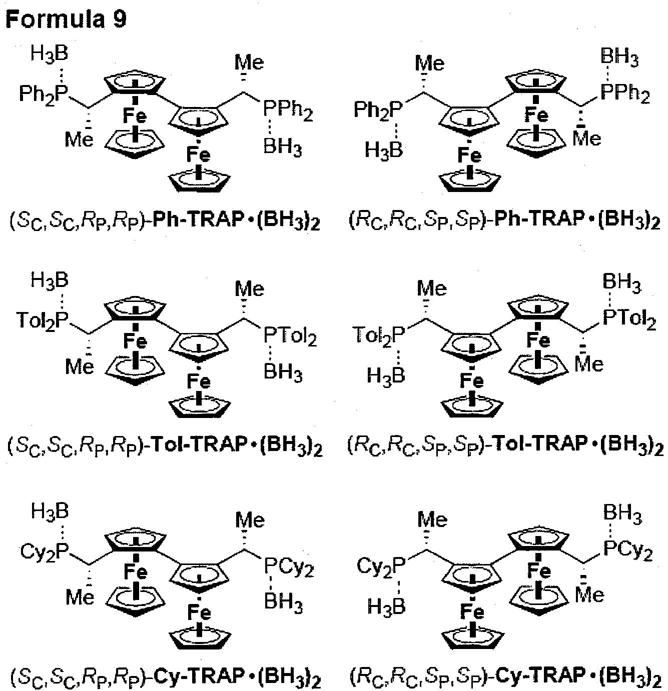 [Wherein, Cy represents a cyclohexyl group, Ph represents a phenyl group, and Tol represents a 4-methylphenyl group.]

Hereinafter, the production method of R^{P}-TRAP·(BH₃)₂ (1·(BH₃)₂) according to the present invention (hereinafter referred to as the production method of the present invention) is described in detail. R^{P}-TRAP·(BH₃)₂ (1·(BH₃)₂) can be produced readily and reproducibly by reacting R^{P}-PEF-X·BH₃ (2·BH₃) with a magnesium source to convert it into Grignard reagent formally represented by the following general formula (3·BH₃) in brackets (hereinafter referred to as Grignard reagent (3·BH₃)), and then treating the Grignard reagent with an oxidizing agent, as shown in Formula 10 below. 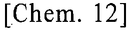 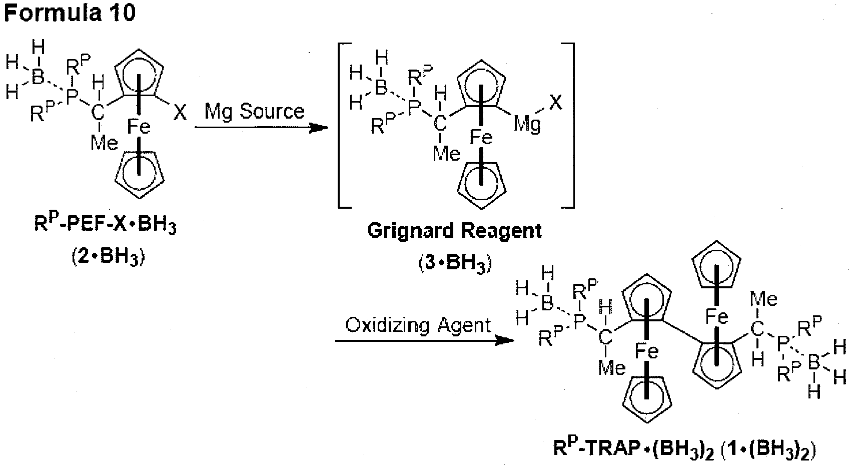 [Wherein, Mg represents a magnesium atom, and X represents a halogen atom.]

Firstly, R^{P}-PEF-X·BH₃ (2·BH₃) according to the production method of the present invention is described in detail. In the general formula (2·BH₃) described above: the solid line, the dashed line, H, B, C, P, Me, Fe, the pentagon containing a circle, the bold line, and two R^{P}s are the same as those defined and detailed in the description of the general formula (1·(BH₃)₂) described above; and X represents a halogeno group. Specific examples of the halogeno group in the general formula (2·BH₃) include a fluoro group, a chloro group, a bromo group, and an iodo group; preferred specific examples thereof include a bromo group and an iodo group; more preferred specific examples thereof include a bromo group, which is excellent in reactivity and atom efficiency.

R^{P}-PEF-X·BH₃ (2·BH₃) according to the production method of the present invention, for the same reasons as that of R^{P}-TRAP·(BH₃)₂ (1·(BH₃)₂) described above, is preferably a single stereoisomer, i.e., an optically active form, particularly from the viewpoint of application to the asymmetric hydrogenation of aromatics. Specific examples of preferred form of optically active R^{P}-PEF-X·BH₃ (2·BH₃) include (S_{C},R_{P})-R^{P}-PEF-X·BH₃ and (R_{C},S_{P})-R^{P}-PEF-X·BH₃ due to their structural requirements, whose stereochemical structures are shown in Formula 11 below. (S_{C},S_{C},R_{P},R_{P})-R^{P}-TRAP·(BH₃)₂ and (R_{C},R_{C},S_{P},S_{P})-R^{P}-TRAP·(BH₃)₂ described above, which are the preferred forms of optically active R^{P}-TRAP ·(BH₃)₂ (1·(BH₃)₂), can be readily and selectively produced by using these optically active R^{P}-PEF-X·BH₃ (2·BH₃).

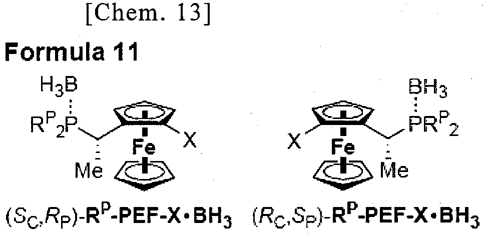

Particularly preferred specific examples of R^{P}-PEF-X·BH₃ (2·BH₃) according to the production method of the present invention include (S_{C},R_{P})-Ph-PEF-Br·BH₃, (R_{C},S_{P})-Ph-PEF-Br·BH₃, (S_{C},R_{P})-Tol-PEF-Br·BH₃, (R_{C},S_{P})-Tol-PEF-Br·BH₃, (S_{C},R_{P})-Cy-PEF-Br·BH₃, and (R_{C},S_{P})-Cy-PEF-Br·BH₃, whose stereochemical structures are shown in Formula 12 below. 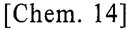 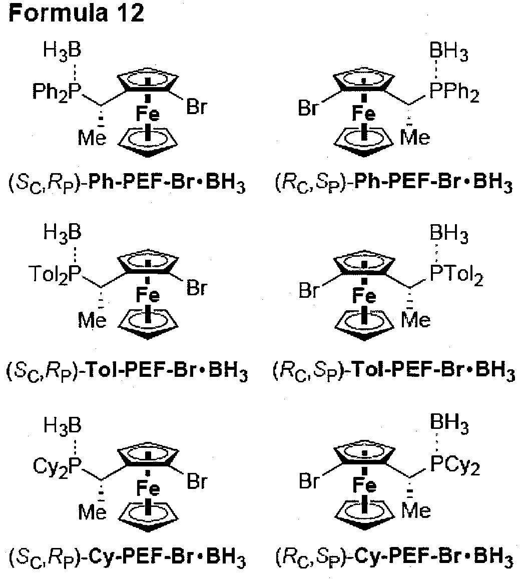 [Wherein, Br represents a bromo group; Cy, Ph, and Tol are the same as those defined and detailed in the description of Formula 9.]

A synthesis method of R^{P}-PEF-X·BH₃ (2·BH₃) according to the production method of the present invention is not particularly limited. As an example, R^{P}-PEF-X·BH₃ (2·BH₃) can be synthesized readily and reproducibly by lithiation and halogenation (Step 1), phosphination (Step 2), and reaction with a borane source (Step 3) of commercially available N,N-dimethyl-1-ferrocenylethylamine (commonly known as Ugi's Amine), as shown in Formula 13 below_{.} In addition, (S_{C},R_{P})-R^{P}-PEF-X·BH₃ and (R_{C},S_{P})-R^{P}-PEF-X·BH₃ described above, which are the preferred forms of optically active R^{P}-PEF-X·BH₃ (2·BH₃) can be readily and selectively prepared by using the optically active form of Ugi's Amine, which is the starting material for the synthesis method. 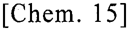 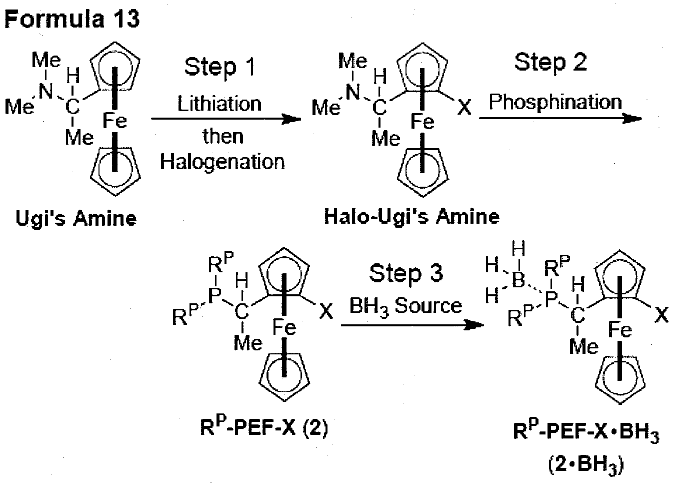 [Wherein, N represents a nitrogen atom.]

Secondly, the magnesium source according to the production method of the present invention is described in detail. Preferred examples of the magnesium source include a magnesium source that can be smoothly converted into Grignard reagent (3·BH₃) described above by reacting with R^{P}-PEF-X·BH₃ (2·BH₃); preferred specific examples thereof include metallic magnesium, ethylmagnesium chloride, ethylmagnesium bromide, isopropylmagnesium chloride, isopropylmagnesium bromide, 2,2-dimethylpropylmagnesium chloride, cyclohexylmagnesium chloride, phenylmagnesium chloride, 2,4,6-trimethylphenylmagnesium bromide, isopropylmagnesium chloride-lithium chloride complex, and sec-butylmagnesium chloride-lithium chloride complex; more preferred specific examples thereof include metallic magnesium, isopropylmagnesium chloride-lithium chloride complex, and sec-butylmagnesium chloride-lithium chloride complex; particularly preferred specific examples thereof include metallic magnesium, which is inexpensive, readily available, and easy to handle. These magnesium sources may be used alone or in combination of two or more. Although the amount of the magnesium source used is not particularly limited, it is appropriately selected from the range of usually 0.5 to 20.0 equivalents, preferably 0.75 to 10.0 equivalents, and more preferably 1.0 to 5.0 equivalents relative to the amount of R^{P}-PEF-X·BH₃ (2·BH₃) used.

In case where metallic magnesium is used as the magnesium source described above, it is preferable to coexist an activator in order to promote a smooth reaction with R^{P}-PEF-X·BH₃ (2·BH₃); specific examples of the activator for metallic magnesium include iodine, bromoethane, ethylmagnesium bromide, 1,2-dibromoethane, 1,2-diiodoethane, diisobutylaluminum hydride, and anhydrous lithium chloride; preferred specific examples thereof include iodine and 1,2-dibromoethane; particularly preferred specific examples thereof include iodine, which is inexpensive, readily available, and easy to handle.

In principle, the reaction of R^{P}-PEF-X·BH₃ (2·BH₃) with a magnesium source can be conducted under solvent-free conditions. However, such conditions require special equipment such as a ball mill or a kneader; therefore, the reaction is preferably carried out in the presence of a solvent for practical purposes. Preferred examples of the solvent include a solvent that does not contribute to the decomposition of Grignard reagent (3 ·BH₃) formed in the reaction; preferred specific examples thereof include: aliphatic hydrocarbons such as n-pentane, n-hexane, n-heptane, n-octane, n-decane, cyclohexane, and decalin; aromatic hydrocarbons such as benzene, toluene, xylenes, mesitylene, p-cymene, and 1,4-diisopropylbenzene; ethers such as diethyl ether, diisopropyl ether, tert-butyl methyl ether, cyclopentyl methyl ether, 1,2-dimethoxyethane, 1,2-diethoxyethane, tetrahydrofuran, 2-methyltetrahydrofuran, 4-methyltetrahydropyran, and 1,4-dioxane; more preferred specific examples thereof include ethers such as cyclopentyl methyl ether, tetrahydrofuran, 2-methyltetrahydrofuran, and 4-methyltetrahydropyran; particularly preferred specific examples thereof include tetrahydrofuran, which is inexpensive, readily available, and exhibits excellent coordination ability to the resulting Grignard reagent. These solvents may be used alone or in combination of two or more. Although the amount of the solvent used is not particularly limited, it is appropriately selected from the range of usually 0.5 to 100 times by volume, preferably 0.75 to 75 times by volume, and more preferably 1 to 50 times by volume relative to the weight of R^{P}-PEF-X·BH₃ (2·BH₃) used.

The reaction of R^{P}-PEF-X·BH₃ (2·BH₃) with the magnesium source is preferably carried out under an inert gas atmosphere in order to suppress decomposition of the resulting Grignard reagent (3·BH₃). Specific examples of the inert gas include argon gas and nitrogen gas; preferred examples thereof include nitrogen gas. The reaction temperature is appropriately selected from the range of usually -78°C to 200°C, preferably -40°C to 160°C, and more preferably 0°C to 120°C. Although the reaction time depends on the chemical structure of R^{P}-PEF-X·BH₃ (2·BH₃) used, the chemical structure and amount of the magnesium source used, the chemical structure and amount of the solvent used, and the reaction temperature, it is appropriately selected from the range of usually 5 minutes to 24 hours, preferably 10 minutes to 12 hours, and more preferably 15 minutes to 6 hours.

The chemical structure of Grignard reagent (3·BH₃) generated by the reaction of R^{P}-PEF-X·BH₃ (2·BH₃) with the magnesium source is formally represented by the general formula (3 ·BH₃) in brackets described above. However, similar to the typical Grignard reagents, it may exist in a solvent as a monomer, dimer, or higher oligomer, may be stabilized by coordination of the solvent, and may also exist in the Schlenk equilibrium state. Furthermore, in case where lithium chloride is present in the reaction system, Grignard reagent (3·BH₃) may form an ate complex through coordination with the lithium chloride. Regardless of its structural form, Grignard reagent (3·BH₃) is unstable and prone to decomposition, and is therefore preferable to convert it into the desired R^{P}-TRAP·(BH₃)₂ (1·(BH₃)₂) by treatment with an oxidizing agent without performing any post-treatment, isolation, or purification.

Thirdly, the oxidizing agent according to the production method of the present invention is described in detail. Preferred examples of the oxidizing agent include an oxidizing agent that enables smooth conversion of Grignard reagent (3·BH₃) into R^{P}-TRAP·(BH₃)₂ (1·(BH₃)₂) without decomposition of the Grignard reagent; preferred specific examples thereof include: iron compounds such as anhydrous iron(III) chloride, anhydrous iron(III) bromide, and iron(III) acetylacetonate; halogenated hydrocarbons such as 1,2-dichloroethane, 1,2-dichloropropane, and 2,3-dichloro-1-propene; quinones such as tetrachloro-p-benzoquinone and 3,3,5,5-tetra-tert-butyldiphenoquinone; nitroxyl radicals such as 2,2,6,6-tetramethylpiperidine-1-oxyl; more preferred specific examples thereof include iron compounds such as anhydrous iron(III) chloride, anhydrous iron(III) bromide, and iron(III) acetylacetonate; particularly preferred specific examples thereof include iron(III) acetylacetonate, which is inexpensive, readily available, and easy to handle. These oxidizing agents may be used alone or in combination of two or more. Although the amount of the oxidizing agent used is not particularly limited, it is appropriately selected from the range of usually 0.25 to 20.0 equivalents, preferably 0.5 to 10.0 equivalents, and more preferably 1.0 to 5.0 equivalents relative to the amount of R^{P}-PEF-X·BH₃ (2·BH₃) used.

The reaction of Grignard reagent (3·BH₃) with the oxidizing agent may be carried out either by adding a solution of the Grignard reagent to the oxidizing agent or a solution thereof, or by adding the oxidizing agent or a solution thereof to the solution of the Grignard reagent. However, from the viewpoint of operational simplicity and ease of reaction control, it is preferable to carry out the reaction by adding the solution of the oxidizing agent to the solution of the Grignard reagent. Preferred specific examples of the solvent used in preparing the solution of the oxidizing agent include a solvent that does not contribute to the decomposition of Grignard reagent (3·BH₃) and the oxidizing agent; preferred specific examples thereof include: aliphatic hydrocarbons such as n-pentane, n-hexane, n-heptane, n-octane, n-decane, cyclohexane, and decalin; aromatic hydrocarbons such as benzene, toluene, xylenes, mesitylene, p-cymene, and 1,4-diisopropylbenzene; ethers such as diethyl ether, diisopropyl ether, tert-butyl methyl ether, cyclopentyl methyl ether, 1,2-dimethoxyethane, 1,2-diethoxyethane, tetrahydrofuran, 2-methyltetrahydrofuran, 4-methyltetrahydropyran, and 1,4-dioxane; more preferred specific examples thereof include aromatic hydrocarbons such as benzene, toluene, xylenes, mesitylene, p-cymene, and 1,4-diisopropylbenzene; particularly preferred specific examples thereof include toluene, which is inexpensive, readily available, and exhibits excellent ability to dissolve the oxidizing agent. These solvents for the oxidizing agent may be used alone or in combination of two or more. Although the amount of the solvent used for the oxidizing agent is not particularly limited, it is appropriately selected from the range of usually 1 to 200 times by volume, preferably 1.5 to 150 times by volume, and more preferably 2 to 100 times by volume relative to the weight of the oxidizing agent used.

The reaction of Grignard reagent (3·BH₃) with the oxidizing agent is preferably carried out under an inert gas atmosphere in order to suppress decomposition of the Grignard reagent; specific examples of the inert gas include argon gas and nitrogen gas; preferred examples thereof include nitrogen gas. The reaction temperature is appropriately selected from the range of usually -40°C to 250°C, preferably -20°C to 200°C, and more preferably 0°C to 150°C. Although the reaction time depends on the chemical structure of Grignard reagent (3·BH₃) used, the chemical structure and amount of the oxidizing agent used, the chemical structure and amount of the solvent used, and the reaction temperature, it is appropriately selected from the range of usually 2 minutes to 12 hours, preferably 5 minutes to 6 hours, and more preferably 10 minutes to 3 hours.

In the reaction of Grignard reagent (3 ·BH₃) with the oxidizing agent, not only desired R^{P}-TRAP·(BH₃)₂ (1·(BH₃)₂) may be produced, but a diphosphine-monoborane complex represented by the following general formula (1·BH₃) (hereinafter referred to as R^{P}-TRAP·BH₃ (1·BH₃)) may also be formed as a by-product due to dissociation of a borane molecule from the target compound in the reaction system, as shown in Formula 14 below. R^{P}-TRAP·BH₃ (1·BH₃) thus formed may, if necessary, be converted into R^{P}-TRAP·(BH₃)₂ (1·(BH₃)₂) by treatment with a borane source. Specific examples of the borane source include borane-tetrahydrofuran complex, borane-dimethylsulfide complex, borane-pyridine complex, picoline-borane complex, and mixture of sodium borohydride/acetic acid; particularly preferred specific examples thereof include borane-tetrahydrofuran complex, which facilitates easy post-treatment, isolation, and purification as described below. Although the amount of the borane source used is not particularly limited, it is appropriately selected from the range of usually 0.01 to 2.0 equivalents, preferably 0.05 to 1.0 equivalents, more preferably 0.1 to 0.5 equivalents relative to the amount of R^{P}-PEF-X·BH₃ (2·BH₃) used. 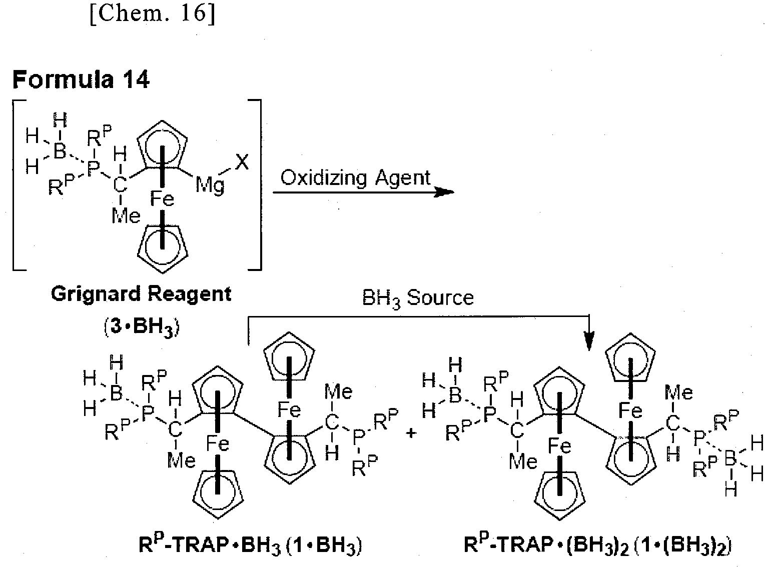 [Wherein, Mg is the same as that defined and detailed in the description of Formula 10.]

The reaction solution obtained through the reaction of Grignard reagent (3 ·BH₃) with the oxidizing agent, and optionally through treatment with the borane source described above, may, if necessary, be subjected to post-treatment, and the desired R^{P}-TRAP·(BH₃)₂ (1·(BH₃)₂) may be isolated from the solution and further purified. Specific examples of the post-treatment methods include: washing of the reaction solution; extraction of the aqueous layer; drying, filtration, and concentration of the organic layer. These post-treatment methods may be carried out alone or in combination. Specific examples of the isolation methods include: crystallization of the reaction solution; filtration, washing, and drying of crude crystals. These isolation methods may be carried out alone or in combination. Specific examples of the purification methods include: dissolution, decolorization with an adsorbent, column chromatography, and recrystallization of the concentrate or crude crystals; filtration, washing and drying of purified crystals. These purification methods may be carried out alone or in combination.

When using R^{P}-TRAP·(BH₃)₂ (1·(BH₃)₂) as a stable equivalent of R^{P}-TRAP (1) described in detail below, the reaction solution obtained by the production method of the present invention may be used as is, or may be used after performing the above-described post-treatment, isolation, or purification as necessary. On the other hand, according to the preferred embodiment of the present invention, R^{P}-TRAP·(BH₃)₂ (1·(BH₃)₂) exhibits excellent crystallinity and air stability, and is also suitable for long-term storage. Therefore, in order to fully utilize these properties, it is preferable to use the present compound as a stable equivalent of R^{P}-TRAP (1) after performing the above-described post-treatment, isolation, and purification.

R^{P}-TRAP·(BH₃)₂ (1·(BH₃)₂) obtained by the production method of the present invention can be readily converted into the diphosphine compound represented by the following general formula (1), i.e., R^{P}-TRAP (1), by treating it with a borane-dissociating agent as necessary, as shown in Formula 15 below. Specific examples of the borane-dissociating agent include: amines such as triethylamine, 4-(dimethylamino)pyridine, diethylamine, pyrrolidine, N-methylpyrrolidine, piperidine, morpholine, quinuclidine, and 1,4-diazabicyclo[2.2.2]octane (DABCO); primary alcohols such as methanol, ethanol, n-propanol, n-butanol, n-pentanol, and n-hexanol; Brønsted acids such as tetrafluoroboric acid-diethyl ether complex and trifluoromethanesulfonic acid; olefins such as 1-octene; preferred specific examples thereof include: amines such as diethylamine, pyrrolidine, piperidine, morpholine, quinuclidine and DABCO; primary alcohols such as n-propanol, n-butanol, and n-pentanol; particularly preferred specific examples thereof include DABCO and n-propanol, which are inexpensive, readily available, and easy to handle.

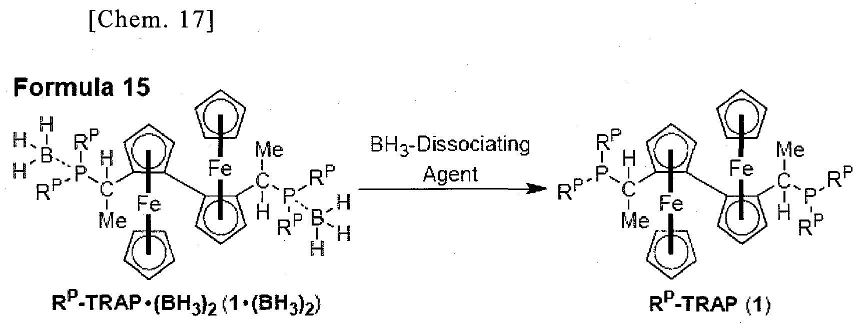

Particularly preferred specific examples of R^{P}-TRAP (1) according to the present invention include (S_{C},S_{C},R_{P},R_{P})-Ph-TRAP, (R_{C},R_{C},S_{P},S_{P})-Ph-TRAP, (S_{C},S_{C},R_{P},R_{P})-Tol-TRAP, (R_{C},R_{C},S_{P},S_{P})-Tol-TRAP, (S_{C},S_{C},R_{P},R_{P})-Cy-TRAP, and (R_{C},R_{C},S_{P},S_{P})-Cy-TRAP, whose stereochemical structures are shown in Formula 16 below. 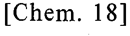 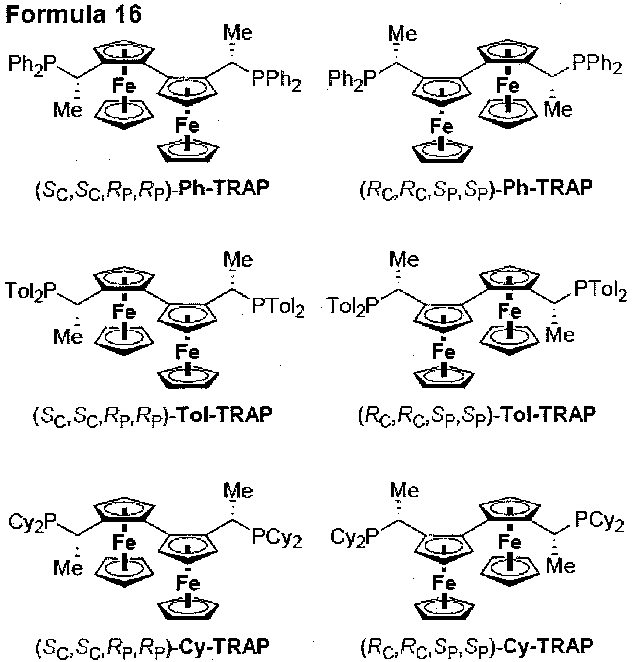 [Wherein, Cy, Ph, and Tol are the same as those defined and detailed in the description of Formula 9.]

The present invention enables the preparation of R^{P}-TRAP (1), which was previously difficult to synthesize, isolate, or purify, from R^{P}-TRAP·(BH₃)₂ (1·(BH₃)₂) as needed. Therefore, the present invention is expected to facilitate the practical application and further improvement in efficiency of various catalytic reactions, including the asymmetric hydrogenation of aromatics, which is useful for the production of optically active cyclic compounds.

### Examples

Hereinafter, specific examples will be described in detail regarding the production of R^{P}-PEF-X·BH₃ (2·BH₃) and R^{P}-TRAP·(BH₃)₂ (1·(BH₃)₂), as well as the conversion of R^{P}-TRAP·(BH₃)₂ (1·(BH₃)₂) into R^{P}-TRAP (1). However, the present invention is not limited thereto in any way. Examples 1 to 3 relate to the production of R^{F}-PEF-X·BH₃ (2·BH₃), Examples 4 to 7 relate to the production of R^{P}-TRAP·(BH₃)₂ (1·(BH₃)₂), and Examples 8 to 10 relate to the production of R^{P}-TRAP (1). Unless otherwise noted, substrates and solvents were charged under a nitrogen stream, reactions were carried out under a nitrogen atmosphere, post-treatment, isolation, and purification were performed in air. In the examples, the apparatus used for measuring physical properties and the measurement and analysis conditions are listed below:
1) Proton Nuclear Magnetic Resonance Spectroscopy (¹H NMR): 400MR DD2 Type Apparatus (resonance frequency 400 MHz; manufactured by Agilent Technologies, Inc.)
2) Carbon 13 Nuclear Magnetic Resonance Spectroscopy (¹³C NMR): 400MR DD2 Type Apparatus (resonance frequency 100 MHz; manufactured by Agilent Technologies, Inc.)
3) Phosphorus 31 Nuclear Magnetic Resonance Spectroscopy (³¹P NMR): 400MR DD2 Type Apparatus (resonance frequency 161 MHz; manufactured by Agilent Technologies, Inc.)
4) X-ray Crystallography: XtaLAB Synergy-S Type Apparatus (manufactured by Rigaku Oxford Diffraction)
   [Measurement and Analysis Conditions] X-ray Source: CuKα radiation; Device Control Program: CrysAlis^{PRO}; Structural Analysis Software: Olex² 1.3-ac4; Structural Analysis Program: SHELXS and SHELXL-2018/3; Drawing Software: Mercury 4.3.0.

### [Example 1] Production of {(S_{C},R_{P})-1-Bromo-2-[1-(diphenylphosphino-κP)ethyl]ferrocene}trihydroboron((S_{C},R_{P})-Ph-PEF-Br·BH₃) (Formula 17)

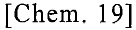

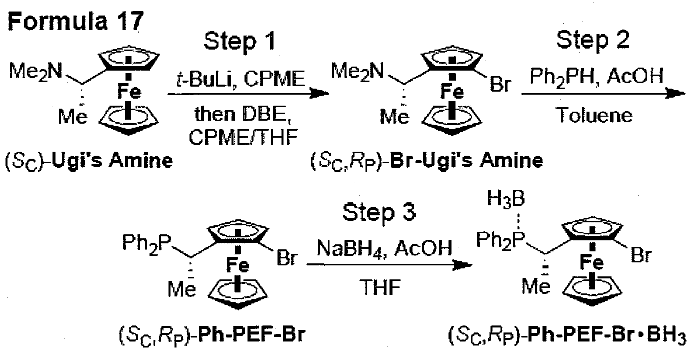

### Step 1: Synthesis of (S_{C},R_{P})-1-Bromo-2-[1-(dimethylamino)ethyl]ferrocene ((S_{C},R_{P})-Br-Ugi's Amine)

[Setup and Reaction] A 200 mL, four-necked, round-bottomed flask was charged with (Sc)-N,N-dimethyl-1-ferrocenylethylamine ((Sc)-Ugi's Amine; 8.7 g, 33.9 mmol, 1.0 equivalent), equipped with a magnetic stirring bar, dropping funnel, thermometer, and a three-way stopcock, then evacuated and backfilled with nitrogen. Dehydrated cyclopentyl methyl ether (CPME; 51 mL) was added to the flask, and the resulting reddish orange solution was then cooled to -20°C under stirring using a dry ice-acetone bath. A solution of tert-butyllithium (t-BuLi) in n-pentane (1.70 mol/L, 21.9 mL, 37.3 mmol, 1.1 equivalents) was charged into the dropping funnel, and then added dropwise over 30 minutes to the stirred reaction solution at a rate sufficient to maintain the internal temperature -15°C or below. The resulting orange slurry was stirred at -20°C for 2 hours, followed by the addition of dehydrated tetrahydrofuran (THF; 10 mL). Next, 1,2-dibromoethane (DBE; 3.4 mL, 39.5 mmol, 1.17 equivalents) and dehydrated THF (7 mL) were successively charged into the dropping funnel, and then added dropwise over 30 minutes to the stirred reaction mixture at a rate sufficient to maintain the internal temperature at -15°C or below. The resulting mixture was further stirred at -20°C for 1 hour.

[Post-Treatment] The resulting yellowish orange reaction solution was allowed to warm to room temperature, followed by the addition of tap water (20 mL). The biphasic mixture was stirred and then allowed to stand to separate the aqueous layer. The organic layer was washed twice with tap water (20 mL), and then concentrated to dryness under reduced pressure using a rotary evaporator, yielding 11.3 g of a crude product of the desired (S_{C},R_{P})-Br-Ugi's Amine as a dark brown solid. Purity: 90.1 mol%. Despite the presence of (S_{C},S_{P})-Br-Ugi's amine and unreacted (Sc)-Ugi's amine as major impurities, the present compound was used in its crude form in the next step without further purification.

¹H NMR (400 MHz, CDCl₃): δ = 4.46 (dd, J = 1.6, 2.4 Hz, 1H), 4.16 (s, 5H), 4.14 (dt, J = 0.4, 2.8 Hz, 1H), 4.10 (ddd, J = 0.4, 1.6, 2.8 Hz, 1H), 3.75 (q, J = 7.2 Hz, 1H), 2.13 (s, 6H), 1.52 (d, J = 7.2 Hz, 3H).
¹³C NMR (100 MHz, CDCl₃): δ = 87.38, 79.80, 71.21, 69.82, 65.68, 65.19, 56.07, 41.15, 16.80.

### Step 2: Synthesis of (S_{C},R_{P})-1-Bromo-2-[1-(diphenylphosphino)ethyl]ferrocene ((S_{C},R_{P})-Ph-PEF-Br)

[Setup and Reaction] A 200 mL, four-necked, round-bottomed flask was charged with the crude product of (S_{C},R_{P})-Br-Ugi's Amine synthesized in Step 1 (purity: 90.1 mol%, 11.3 g, <33.9 mmol, 1.0 equivalent), equipped with a magnetic stirring bar, Dimroth condenser, thermometer, and a three-way stopcock, then evacuated and backfilled with nitrogen. Degassed toluene (14 mL), degassed acetic acid (13.6 mL, 237.3 mmol, 7.0 equivalents), and diphenylphosphine (Ph₂PH; 5.9 mL, 33.9 mmol, 1.0 equivalent) were sequentially added to the flask. The resulting dark brown solution was stirred under reflux for 6 hours while being heated using an oil bath set at 130°C.

[Post-Treatment] The resulting reaction solution was allowed to cool to 40°C, followed by the sequential addition of degassed toluene (70 mL) and degassed water (28 mL). The biphasic mixture was stirred at 40°C for 30 minutes, allowed to stand, and the aqueous layer was then removed under a nitrogen atmosphere. The remaining organic layer was washed twice with degassed water (56 mL) at 40°C under a nitrogen atmosphere. After attaching a Claisen distillation apparatus to the reaction flask, the washed organic layer was stirred at 60°C while gradually reducing the pressure inside the apparatus to 15 Torr, thus being concentrated to dryness. The apparatus was brought back to atmospheric pressure under nitrogen after the concentration, yielding a crude product of the desired (S_{C},R_{P})-Ph-PEF-Br (<33.9 mmol) as a dark brown amorphous substance. Due to its gradual decomposition in air, the present compound was used in its crude form in the next step while being stored in the reaction flask filled with nitrogen.
³¹P NMR (161MHz, CDCl₃): δ = 7.55 (s, 1P)

### Step 3: Synthesis of (S_{C},R_{P})-Ph-PEF-Br·BH₃

[Setup and Reaction] This step was carried out using the reaction flask from Step 2, replacing the Claisen distillation apparatus with a dropping funnel. Dehydrated THF (34 mL) and sodium borohydride (NaBH₄; 1.54 g, 40.7 mmol, 1.2 equivalents) were sequentially added to the crude product of (S_{C},R_{P})-Ph-PEF-Br (<33.9 mmol, 1.0 equivalent), synthesized in Step 2 and stored in the reaction flask filled with nitrogen. Degassed acetic acid (2.3 mL, 40.7 mmol, 1.2 equivalents) and dehydrated THF (9.2 mL) were successively charged into the dropping funnel, and then added dropwise over 5 minutes to the stirred suspension in the reaction flask at a rate sufficient to maintain the internal temperature at 40°C or below (bubbling was observed during the addition). The resulting reaction solution was stirred at 40°C for 30 minutes, and then stirred under reflux for 3 hours while being heated using an oil bath set at 80°C.

[Post-Treatment, Isolation and Purification] After the resulting reaction solution was allowed to cool to room temperature under stirring, a mixture of methanol (68 mL) and tap water (34 mL) was charged into the dropping funnel, and then added dropwise to the solution over 15 minutes (vigorous bubbling was observed at the initial stage of the addition). The resulting orange slurry was cooled to 0°C using an ice-water bath, and then filtered by suction using a Kiriyama funnel to collect crude crystals, which were washed with a mixture of methanol (34 mL) and tap water (8.5 mL). To the wet crude crystals obtained (approximately 18 g), toluene (90 mL) and tap water (45 mL) were sequentially added. The resulting biphasic mixture was stirred at 40°C, filtered by suction using a Kiriyama funnel, and then allowed to stand to separate the aqueous layer. The organic layer was dehydrated and decolorized with silica gel, and then concentrated to dryness under reduced pressure using a rotary evaporator. The obtained residue was recrystallized from toluene and n-heptane, producing 12.9 g of the desired (S_{C},R_{P})-Ph-PEF-Br·BH₃ as an air-stable orange powder. Overall Yield from (Sc)-Ugi's Amine: 77.5%. In this reaction, several by-products derived from impurities in the (S_{C},R_{P})-Br-Ugi's Amine used in Step 2 were formed; however, all of them could be readily removed by the recrystallization. Single crystals of the present compound were successfully prepared by solution diffusion using THF as a good solvent and n-hexane as a poor solvent.

¹H NMR (400 MHz, CDCl₃): δ = 8.02-7.93 (m, 2H), 7.63-7.53 (m, 3H), 7.33-7.27 (m, 1H), 7.17-7.03 (m, 4H), 4.49 (t, J = 1.6 Hz, 1H), 4.28 (dd, J = 1.6, 2.4 Hz, 1H), 4.21 (dt, J = 0.4, 2.4 Hz, 1H), 4.18 (s, 5H), 3.68 (dq, J = 16.4, 7.2 Hz, 1H), 1.66 (dd, J = 7.2, 16.4 Hz, 3H), 1.42-0.30 (br, 3H).
¹³C NMR (100 MHz, CDCl₃): δ = 133.46 (d, J_{P-C} = 8.4 Hz), 133.06 (d, J_{P-C} = 8.5 Hz), 131.61 (d, J_{P-C} = 2.5 Hz), 130.64 (d, J_{P-C} = 2.5 Hz), 128.91 (d, J_{P-C} = 9.3 Hz), 128.15 (d, J_{P-C} = 54.0 Hz), 127.70 (d, J_{P-C} = 10.2 Hz), 127.00 (d, J_{P-C} = 51.5 Hz), 86.81 (d, J_{P-C} = 4.2 Hz), 80.86 (s), 70.99 (s), 68.96 (s), 66.44 (s), 66.23 (s), 29.22 (d, J_{P-C} = 30.4 Hz), 17.39 (d, J_{P-C} = 5.1 Hz).
³¹P NMR (161 MHz, CDCl₃): δ = 26.37 (br, 1P).

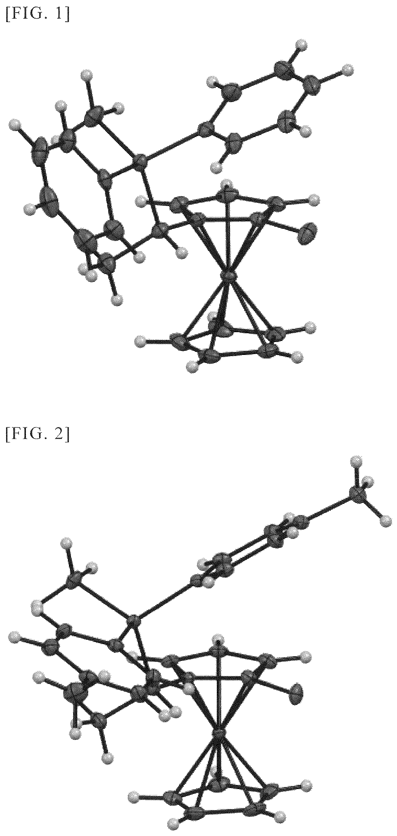

FIG. 1 shows the result of X-ray crystallography (thermal ellipsoid plot; 50% probability level) of (S_{C},R_{P})-Ph-PEF-Br·BH₃ produced in Example 1. The result clearly confirmed that the absolute configuration of the present compound is indeed (S_{C},R_{P}). The key parameters ensuring the reliability of the crystallographic analysis are summarized below; Chemical Formula: C₂₄H₂₅BBrFeP; Crystal System: Orthorhombic; Space Group: P2₁2₁2₁ (#19); Lattice Constants: a = 7.16774(9) Å, b = 17.5019(2) Å, c = 17.5270(2) Å, α = β = γ = 90°; Reliability Factor (R₁): 0.0250; Weighted Reliability Factor (wR₂): 0.0610; Goodness of Fit (GOF): 1.060; Flack Parameter: -0.014(2).

### [Example 2] Production of {(S_{C},R_{P})-1-Bromo-2-[1-(bis(4-methylphenyl)phosphino-κP)ethyl]ferrocene}trihydroboron ((S_{C},R_{P})-Tol-PEF-Br·BH₃) (Formula 18)

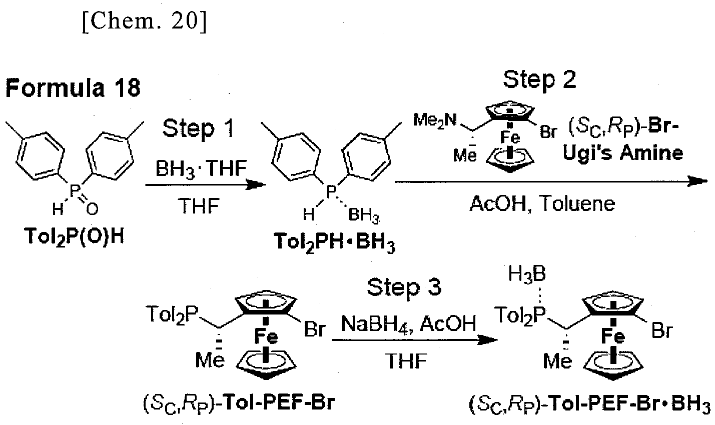

### Step 1: Synthesis of [Bis(4-methylphenyl)phosphine-κP]trihydroboron (Tol₂PH·BH₃)

[Setup and Reaction] A 500 mL, four-necked, round-bottomed flask was charged with bis(4-methylphenyl)phosphine oxide (Tol₂P(O)H; 24.7 g, 107.3 mmol, 1.0 equivalent), equipped a magnetic stirring bar, dropping funnel, thermometer, and a three-way stopcock, then evacuated and filled with nitrogen. Dehydrated THF (200 mL) was added to the flask, and the resulting solution was then cooled to 20°C under stirring using a water bath. A solution of borane-tetrahydrofuran complex (BH₃·THF) in THF (1.10 mol/L, 200.0 mL, 220.0 mmol, 2.05 equivalents) was charged into the dropping funnel, and then added dropwise over 4.5 hours to the stirred reaction solution at a rate sufficient to maintain the internal temperature at 30°C or below.

[Post-Treatment, Isolation and Purification] After adding toluene (50 mL) to the reaction solution, the dropping funnel on the reaction flask was replaced with a Claisen distillation apparatus. The resulting mixture was stirred at 40°C while gradually reducing the pressure inside the apparatus to 100 Torr, and approximately 290 mL of solvent was recovered. To the obtained concentrated solution, toluene (200 mL) and tap water (100 mL) were sequentially added (vigorous bubbling was observed at the initial stage of water addition). The biphasic mixture was stirred at room temperature and then allowed to stand to separate the aqueous layer. The organic layer was washed twice with tap water (50 mL), dehydrated and decolorized with silica gel, and then concentrated to dryness under reduced pressure using a rotary evaporator. The obtained residue was triturated and then dried by heating at 40°C under a reduced pressure of 1 Torr for 1 hour, yielding 22.1 g of the desired Tol₂PH·BH₃ as a colorless powder. Purity: 98.0% by weight (the main impurity was Tol₂P(O)H); Isolated Yield: 88.5%.

¹H NMR (400 MHz, CDCl₃): δ = 7.54 (ddd, J = 1.6, 6.4, 11.6 Hz, 4H), 7.29-7.21 (m, 4H), 6.25 (dq, J = 377.6, 6.8 Hz, 1H), 2.37 (s, 6H), 1.50-0.50 (bm, 3H).
¹³C NMR (100 MHz, CDCl₃): δ = 142.05 (d, J_{P-C} = 2.5 Hz), 132.87 (d, J_{P-C} = 10.1 Hz), 129.80 (d, J_{P-C} = 11.0 Hz), 122.97 (d, J_{P-C} = 59.0 Hz), 21.59 (s).
³¹P NMR (161 MHz, CDCl₃): δ = -0.72 (d, J = 59.9 Hz, 1P).

### Step 2: Synthesis of (S_{C},R_{P})-1-Bromo-2-{1-[bis(4-methylphenyl)phosphino]ethyl}ferrocene ((S_{C},R_{P})-Tol-PEF-Br)

[Setup and Reaction] A 200 mL, four-necked, round-bottomed flask was charged with Tol₂PH·BH₃ synthesized in Step 1 (purity: 98.0% by weight, 8.15 g, 35.0 mmol, 1.0 equivalent), and the crude product of (S_{C},R_{P})-Br-Ugi's Amine, separately synthesized according to the procedure described in Step 1 of Example 1 (purity: 93.0 mol%, 11.6 g, <35.0 mmol, 1.0 equivalent), equipped with a magnetic stir bar, Dimroth condenser, thermometer, and a three-way stopcock, then evacuated and backfilled with nitrogen. Degassed toluene (20 mL) and degassed acetic acid (20 mL, 350.0 mmol, 10.0 equivalents) were sequentially added to the flask. The resulting dark brown solution was stirred under reflux for 6 hours while being heated using an oil bath set at 130°C.

[Post-treatment] The resulting reaction solution was allowed to cool to 40°C, followed by the sequential addition of degassed toluene (100 mL) and degassed water (40 mL). The biphasic mixture was stirred at 40°C for 30 minutes, allowed to stand, and the aqueous layer was then removed under a nitrogen atmosphere. After attaching a Claisen distillation apparatus to the reaction flask, the remaining organic layer was stirred at 60°C while gradually reducing the pressure inside the apparatus to 15 Torr, thus being concentrated to dryness. The apparatus was brought back to atmospheric pressure under nitrogen after the concentration, yielding a crude product of the desired (S_{C},R_{P})-Tol-PEF-Br (<35.0 mmol) as an orange solid. Due to its gradual decomposition in air, the present compound was used in its crude form in the next step while being stored in the reaction flask filled with nitrogen.
³¹P NMR (161 MHz, CDCl₃): δ = 6.08 (s, 1P).

### Step 3: Synthesis of (S_{C},R_{P})-Tol-PEF-Br·BH₃

[Setup and Reaction] This step was carried out using the reaction flask from Step 2, replacing the Claisen distillation apparatus with a dropping funnel. Dehydrated THF (35 mL) and NaBH₄ (1.59 g, 42.0 mmol, 1.2 equivalents) were sequentially added to the crude product of (S_{C},R_{P})-Tol-PEF-Br (<35.0 mmol, 1.0 equivalent), synthesized in Step 2 and stored in the reaction flask filled with nitrogen. Degassed acetic acid (2.40 mL, 42.0 mmol, 1.2 equivalents) and dehydrated THF (9.6 mL) were successively charged into the dropping funnel, and then added dropwise over 5 minutes to the stirred suspension in the reaction flask at a rate sufficient to maintain the internal temperature at 40°C or below (bubbling was observed during the addition). The resulting reaction solution was stirred at 40°C for 30 minutes, and then stirred under reflux for 2 hours while being heated using an oil bath set at 80°C.

[Post-Treatment, Isolation and Purification] After the resulting reaction solution was allowed to cool to room temperature under stirring, a mixture of methanol (70 mL) and tap water (35 mL) was charged into the dropping funnel, and then added dropwise to the solution over 15 minutes (vigorous bubbling was observed at the initial stage of the addition). The resulting orange slurry was cooled to 0°C using an ice-water bath, and then filtered by suction using a Kiriyama funnel to collect crude crystals, which were washed with a mixture of methanol (35 mL) and tap water (17.5 mL). To the wet crude crystals obtained (approximately 16 g), toluene (160 mL) and tap water (80 mL) were sequentially added. The resulting biphasic mixture was stirred at 60°C, filtered by suction using a Kiriyama funnel, and then allowed to stand to separate the aqueous layer. The organic layer was dehydrated and decolorized with silica gel, and then concentrated to dryness under reduced pressure using a rotary evaporator. The obtained residue was recrystallized from toluene and n-heptane, producing 13.4 g of the desired (S_{C},R_{P})-Tol-PEF-Br·BH₃ as an air-stable orange powder. Overall Yield from (Sc)-Ugi's Amine: 73.8%. In this reaction, several by-products derived from impurities in the (S_{C},R_{P})-Br-Ugi's Amine used in Step 2 were formed; however, all of them could be readily removed by the recrystallization. Single crystals of the present compound were successfully prepared by solution diffusion using toluene as a good solvent and n-hexane as a poor solvent.

¹H NMR (400 MHz, CDCl₃): δ = 7.83 (dd, J = 8.0, 9.6 Hz, 2H), 7.35 (dd, J = 2.0, 8.0 Hz, 2H), 7.01-6.90 (m, 4H), 4.46 (t, J = 1.6 Hz, 1H), 4.29 (dd, J = 1.6, 2.4 Hz, 1H), 4.19 (t, J = 2.4 Hz, 1H), 4.18 (s, 5H), 3.62 (dq, J = 15.6, 7.2 Hz, 1H), 2.45 (s, 3H), 2.26 (s, 3H), 1.63 (dd, J = 7.2, 15.6 Hz, 3H), 1.40-0.28 (br, 3H).
¹³C NMR (100 MHz, CDCl₃): δ = 141.90 (s), 140.81 (d, J_{P-C} = 2.5 Hz), 133.37 (d, J_{P-C} = 8.5 Hz), 132.97 (d, J_{P-C} = 9.3 Hz), 129.63 (d, J_{P-C} = 9.3 Hz), 128.48 (d, J_{P-C} = 11.0 Hz), 124.93 (d, J_{P-C} = 55.6 Hz), 123.77 (d, J_{P-C} = 54.0 Hz), 87.08 (d, J_{P-C} = 4.2 Hz), 80.91 (s), 70.95 (s), 68.90 (s), 66.45 (s), 66.11 (s), 29.31 (d, J_{P-C} = 31.1 Hz), 21.57 (s), 21.39 (s), 17.44 (d, J_{P-C} = 5.9 Hz).
³¹P NMR (161 MHz, CDCl₃): δ = 24.95 (d, J = 44.9 Hz, 1P).

FIG. 2 shows the result of X-ray crystallography (thermal ellipsoid plot; 50% probability level) of (S_{C},R_{P})-Tol-PEF-Br·BH₃ produced in Example 2. The result clearly confirmed that the absolute configuration of the present compound is indeed (S_{C},R_{P}). The key parameters ensuring the reliability of the crystallographic analysis are summarized below; Chemical Formula: C₂₆H₂₉BBrFeP; Crystal System: Monoclinic; Space Group: P12₁1 (#4); Lattice Constants: a = 7.52412(7) Å, b = 11.34071(11) Å, c = 13.60999(12) Å, α = γ = 90°, β = 90.6522°; R₁: 0.0260; wR₂: 0.0665; GOF: 1.062; Flack Parameter: -0.014(2).

### [Example 3] Production of {(S_{C},R_{P})-1-Bromo-2-[1-(dicyclophosphino-κP)ethyl]ferrocene}trihydroboron ((S_{C},R_{P})-Cy-PEF-Br·BH₃) (Formula 19)

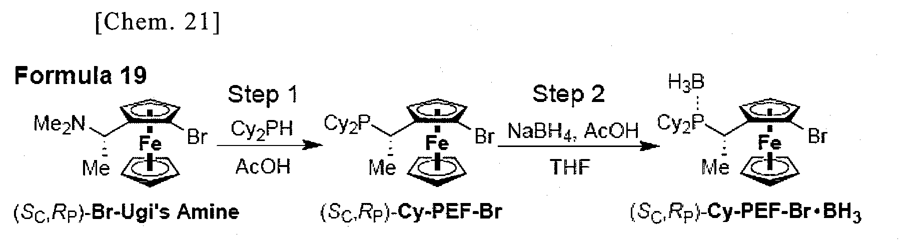

### Step 1: Synthesis of (S_{C},R_{P})-1-Bromo-2-[1-(dicyclohexylphosphino)ethyl]ferrocene ((S_{C},R_{P})-Cy-PEF-Br)

[Setup and Reaction] A 200 mL, four-necked, round-bottomed flask was charged with the crude product of (S_{C},R_{P})-Br-Ugi's Amine, separately synthesized according to the procedure described in Step 1 of Example 1 (purity: 95.7 mol%, 11.6 g, <35.0 mmol, 1.0 equivalent), equipped with a magnetic stirring bar, Dimroth condenser, thermometer, and a three-way stopcock, then evacuated and backfilled with nitrogen. Degassed acetic acid (70 mL, 1.22 mol, 35.0 equivalents) and dicyclohexylphosphine (Cy₂PH; 7.68 mL, 35.0 mmol, 1.0 equivalent) were sequentially added to the flask. The resulting dark brown solution was stirred under reflux for 4 hours while being heated using an oil bath set at 130°C.

[Post-Treatment] After attaching a Claisen distillation apparatus to the reaction flask, the reaction solution was stirred at 80°C while gradually reducing the pressure inside the apparatus to 30 Torr, and approximately 56 mL of acetic acid was recovered. After bringing the apparatus back to atmospheric pressure under nitrogen, degassed toluene (70 mL) and degassed water (28 mL) were sequentially added to the concentrated solution. The biphasic mixture was stirred at 40°C for 30 minutes, allowed to stand, and the aqueous layer was then removed under a nitrogen atmosphere. The remaining organic layer was stirred at 60°C while gradually reducing the pressure inside the apparatus to 15 Torr, thus being concentrated to dryness. The apparatus was brought back to atmospheric pressure under nitrogen after the concentration, yielding a crude product of the desired (S_{C},R_{P})-Cy-PEF-Br (<35.0 mmol) as a dark brown viscous liquid. Due to its gradual decomposition in air, the present compound was used in its crude form in the next step while being stored in the reaction flask filled with nitrogen.
³¹P NMR (161 MHz, CDCl₃): δ = 20.96 (s, 1P).

### Step 2: Synthesis of (S_{C},R_{P})-Cy-PEF-Br·BH₃

[Setup and Reaction] This step was carried out using the reaction flask from Step 1, replacing the Claisen distillation apparatus with a dropping funnel. Dehydrated THF (35 mL) and NaBH₄ (1.59 g, 42.0 mmol, 1.2 equivalents) were sequentially added to the crude product of (S_{C},R_{P})-Cy-PEF-Br (<35.0 mmol, 1.0 equivalent), synthesized in Step 1 and stored in the reaction flask filled with nitrogen. Degassed acetic acid (2.40 mL, 42.0 mmol, 1.2 equivalents) and dehydrated THF (4.8 mL) were successively charged into the dropping funnel, and then added dropwise over 5 minutes to the stirred suspension in the reaction flask at a rate sufficient to maintain the internal temperature at 40°C or below (bubbling was observed during the addition). The resulting reaction solution was stirred at 40°C for 30 minutes, and then stirred under reflux for 1 hour while being heated using an oil bath set at 80°C.

[Post-Treatment, Isolation and Purification] After the resulting reaction solution was allowed to cool to room temperature under stirring, a mixture of methanol (70 mL) and tap water (35 mL) was charged into the dropping funnel, and then added dropwise to the solution over 15 minutes (vigorous bubbling was observed at the initial stage of the addition). The resulting orange slurry was cooled to 0°C using an ice-water bath, and then filtered by suction using a Kiriyama funnel to collect crude crystals, which were washed with a mixture of methanol (35 mL) and tap water (17.5 mL). To the wet crude crystals obtained (approximately 15 g), toluene (140 mL) and tap water (70 mL) were sequentially added. The resulting biphasic mixture was then stirred at 40°C, filtered by suction using a Kiriyama funnel, and then allowed to stand to separate the aqueous layer. The organic layer was dehydrated and decolorized with silica gel, and then concentrated to dryness under reduced pressure using a rotary evaporator. The obtained residue was recrystallized from toluene and methanol, producing 12.6 g of the desired (S_{C},R_{P})-Cy-PEF-Br·BH₃ as an air-stable orange powder. Overall Yield from (Sc)-Ugi's Amine: 71.5%. In this reaction, several by-products derived from impurities in the (S_{C},R_{P})-Br-Ugi's Amine used in Step 1 were formed; however, all of them could be readily removed by the recrystallization. Single crystals of the present compound were successfully prepared by solution diffusion using toluene as a good solvent and methanol as a poor solvent.

¹H NMR (400 MHz, CDCl₃): δ = 4.49 (dd, J = 1.6, 2.8 Hz, 1H), 4.33-4.28 (m, 1H), 4.21 (s, 5H), 4.17 (t, J = 2.4 Hz, 1H), 3.14 (dq, J = 12.4, 7.2 Hz, 1H), 2.02 (bd, J = 12.0 Hz, 2H), 1.95-1.36 (m, 12H), 1.71 (dd, J = 7.2, 14.4 Hz, 3H), 1.36-0.88 (m, 8H), 0.86-(-0.15) (br, 3H).
³¹P NMR (161 MHz, CDCl₃): δ = 38.45 (d, J = 60.9 Hz, 1P).

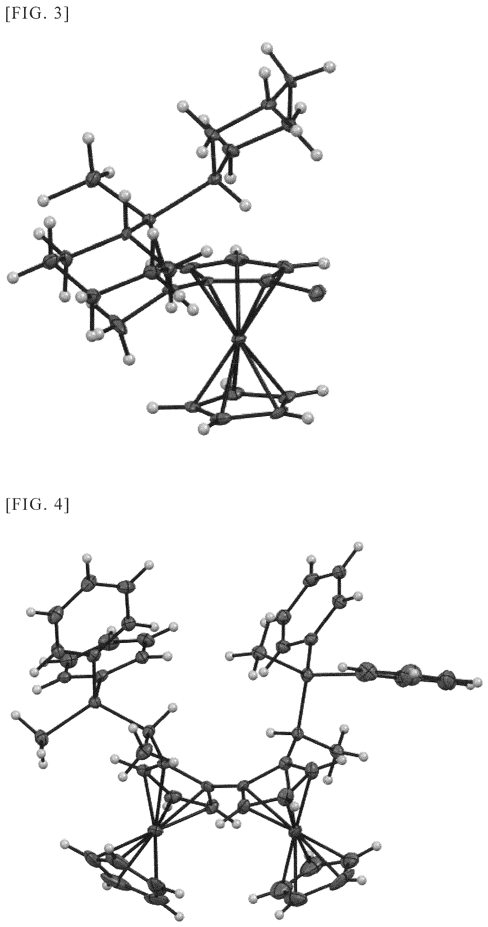

FIG. 3 shows the result of X-ray crystallography (thermal ellipsoid plot; 50% probability level) of (S_{C},R_{P})-Cy-PEF-Br·BH₃ produced in Example 3. The result clearly confirmed that the absolute configuration of the present compound is indeed (S_{C},R_{P}). The key parameters ensuring the reliability of the crystallographic analysis are summarized below; Chemical Formula: C₂₄H₃₇BBrFeP; Crystal System: Monoclinic; Space Group: P12₁1 (#4); Lattice Constants: a = 7.54754(12) Å, b = 13.5828(2) Å, c = 11.8133(2) Å, α = γ = 90°, β = 105.5867(19)°; R₁: 0.0486; wR₂: 0.1144; GOF: 1.036; Flack Parameter: -0.019(6).

### [Example 4] Production of (S_{C},S_{C},R_{P},R_{P})-Ph-TRAP·(BH₃)₂ (Formula 20)

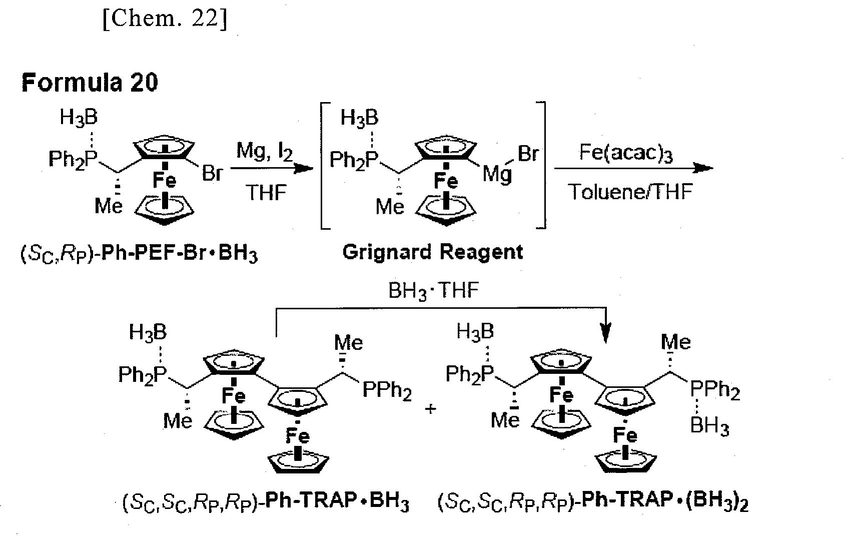

[Setup and Reaction] A 50 mL, four-necked, round-bottomed flask was charged with metallic magnesium as a magnesium source (109 mg, 4.48 mmol, 1.1 equivalents), equipped with a magnetic stirring bar, dropping funnel, Dimroth condenser, and a three-way stopcock, then evacuated and backfilled with nitrogen. Dehydrated THF (550 µL) and iodine as an activator (5.2 mg, 0.5 mol%) were sequentially added to the flask, and the mixture was then stirred gently at room temperature for 15 minutes. To the resulting white suspension, a solution of (S_{C},R_{P})-Ph-PEF-Br·BH₃ produced in Example 1 (2.0 g, 4.07 mmol, 1.0 equivalent) in dehydrated THF (8 mL) was added in one portion. The suspension was stirred under reflux while being heated using an oil bath set at 80°C for 1 hour, affording a solution of the desired Grignard reagent (<4.07 mmol) as a deep-red liquid. A solution of iron(III) acetylacetonate as an oxidizing agent (Fe(acac)₃; 1.51 g, 4.27 mmol, 1.05 equivalents) in dehydrated toluene (15 mL) was charged into the dropping funnel, and then added dropwise to the stirred reaction solution under reflux over 2 minutes. The resulting mixture was further stirred under reflux for 30 minutes while being heated using an oil bath set at 100°C. NMR analysis of a portion of the obtained reaction solution revealed that the desired (S_{C},S_{C},R_{P},R_{P})-Ph-TRAP·(BH₃)₂ and (S_{C},S_{C},R_{P},R_{P})-Ph-TRAP·BH₃, resulting from the dissociation of one borane molecule from the target compound, were detected in a molar ratio of 79.3 : 20.7.

[Post-Treatment, Isolation and Purification] After cooling the reaction solution to room temperature, a THF solution of BH₃·THF as a borane source (1.10 mol/L, 925 µL, 1.02 mmol, 0.25 equivalents) was added under a nitrogen atmosphere. The resulting mixture was stirred at room temperature for 5 minutes, followed by the addition of 1N hydrochloric acid (20 mL, 20.0 mmol, 4.9 equivalents). The biphasic mixture was further stirred at room temperature and then allowed to stand to separate the aqueous layer. The organic layer was washed twice with tap water (10 mL), dehydrated and decolorized with silica gel, and then concentrated to dryness under reduced pressure using a rotary evaporator. The obtained residue was recrystallized from chloroform and n-hexane, producing 1.49 g of the desired (S_{C},S_{C},R_{P},R_{P})-Ph-TRAP·(BH₃)₂ as an air-stable orange powder. Purity: 85.7% by weight (the main impurity was chloroform); Overall Yield from (S_{C},R_{P})-Ph-PEF-Br·BH₃: 76.3%. Single crystals of the present compound were successfully prepared by slow evaporation using chloroform as a solvent.

¹H NMR (400 MHz, CD₂Cl₂): δ = 7.86-7.76 (m, 4H), 7.61-7.54 (m, 2H), 7.53-7.46 (m, 4H), 7.41-7.34 (m, 2H), 7.32 (s, 1.15H [CHCl₃]), 7.28-7.13 (m, 8H), 4.42-4.36 (m, 2H), 4.34 (s, 10H), 4.09 (t, J = 2.4 Hz, 2H), 4.07-3.91 (br, 2H), 3.90-3.72 (br, 2H), 1.74 (dd, J = 7.2, 16.4 Hz, 6H), 1.50-0.40 (br, 6H).
¹³C NMR (100 MHz, CD₂Cl₂): δ = 134.07 (d, J_{P-C} = 8.4 Hz), 132.63 (d, J_{P-C} = 8.5 Hz), 131.58 (d, J_{P-C} = 2.5 Hz), 130.62 (d, J_{P-C} = 1.6 Hz), 129.61 (d, J_{P-C} = 51.4 Hz), 128.81 (d, J_{P-C} = 9.3 Hz), 128.45 (d, J_{P-C} = 9.2 Hz), 128.00 (d, J_{P-C} = 51.4 Hz), 90.09 (s), 84.24 (d, J_{P-C} = 4.2 Hz), 77.60 (s [CHCl₃]) 71.41 (s), 69.71 (s), 68.63 (s), 65.90 (s), 28.91 (d, J_{P-C} = 31.2 Hz), 20.88 (d, J_{P-C} = 3.4 Hz).
³¹P NMR (161 MHz, CD₂Cl₂): δ = 25.73 (br, 2P).

FIG. 4 shows the result of X-ray crystallography (thermal ellipsoid plot; 50% probability level) of (S_{C},S_{C},R_{P},R_{P})-Ph-TRAP·(BH₃)₂ produced in Example 4. For ease of understanding the structure of the present compound, the depiction of two chloroform molecules incorporated as crystallization solvents has been omitted from the figure. The result clearly confirmed that the absolute configuration of the present compound is indeed (S_{C},S_{C},R_{P},R_{P}). The key parameters ensuring the reliability of the crystallographic analysis are summarized below; Chemical Formula: C₅₀H₅₂B₂Cl₆Fe₂P₂; Crystal System: Orthorhombic; Space Group: P2₁2₁2₁ (#19); Lattice Constants: a = 9.4226(2) Å, b = 21.2725(4) Å , c = 24.4250(4) Å, α = β = γ = 90°; R₁: 0.0409; wR₂: 0.0852; GOF: 1.025; Flack Parameter: -0.021(3).

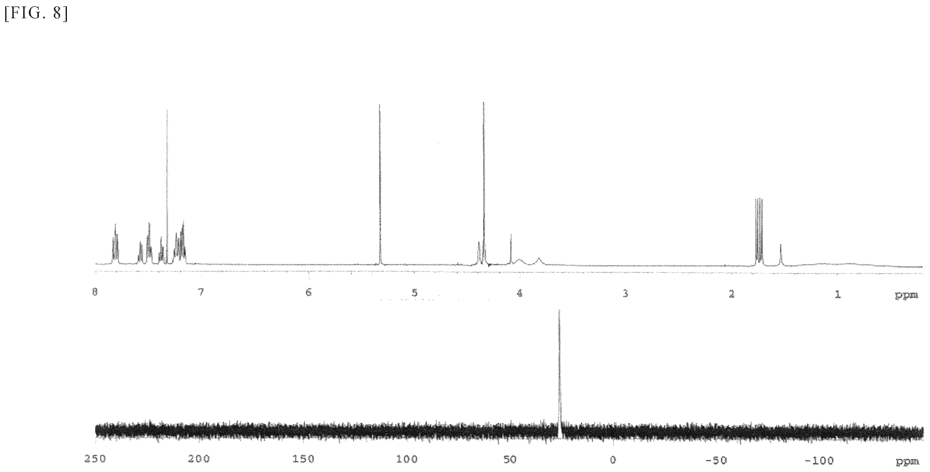

Approximately 10 mg of (S_{C},S_{C},R_{P},R_{P})-Ph-TRAP·(BH₃)₂, produced in Example 4, was weighed out into a glass sample tube, which was plugged with cotton and left in air at room temperature for 6 months. Thereafter, visual inspection and NMR analysis of the air-exposed sample showed results that were essentially identical to those obtained immediately after production. FIG. 8 shows the ¹H NMR (left side) and ³¹P NMR (right side) spectrum charts of (S_{C},S_{C},R_{P},R_{P})-Ph-TRAP·(BH₃)₂, measured in deuterated dichloromethane after being exposed to air at room temperature for 6 months. These results clearly demonstrated that (S_{C},S_{C},R_{P},R_{P})-Ph-TRAP·(BH₃)₂, which is the particularly preferred specific example of R^{P}-TRAP·(BH₃)₂ (1·(BH₃)₂) according to the present invention, is highly stable against oxygen and moisture in the air.

### [Example 5] Production of (R_{C},R_{C},S_{P},S_{P})-Ph-TRAP·(BH₃)₂ (Formula 21)

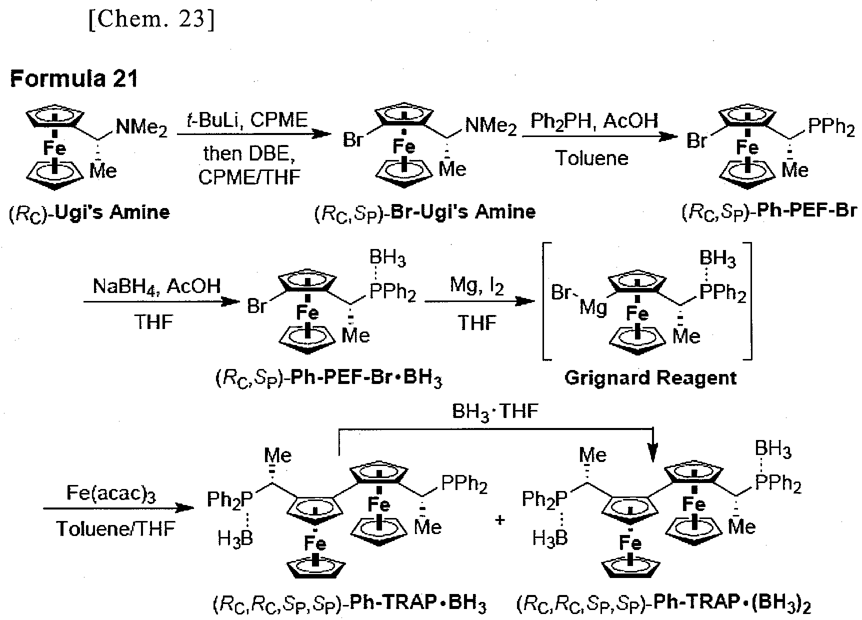

Using (Rc)-Ugi's amine as a starting material, a series of syntheses was carried out according to the procedures described in Example 1 and Example 4, successfully producing the desired (R_{C},R_{C},S_{P},S_{P})-Ph-TRAP·(BH₃)₂ as an air-stable orange powder. NMR analysis results of the present compound were essentially identical to those of (S_{C},S_{C},R_{P},R_{P})-Ph-TRAP·(BH₃)₂ produced in Example 4, except for the difference in chloroform content. Single crystals of the present compound were successfully prepared by slow evaporation using deuterated chloroform as a solvent.

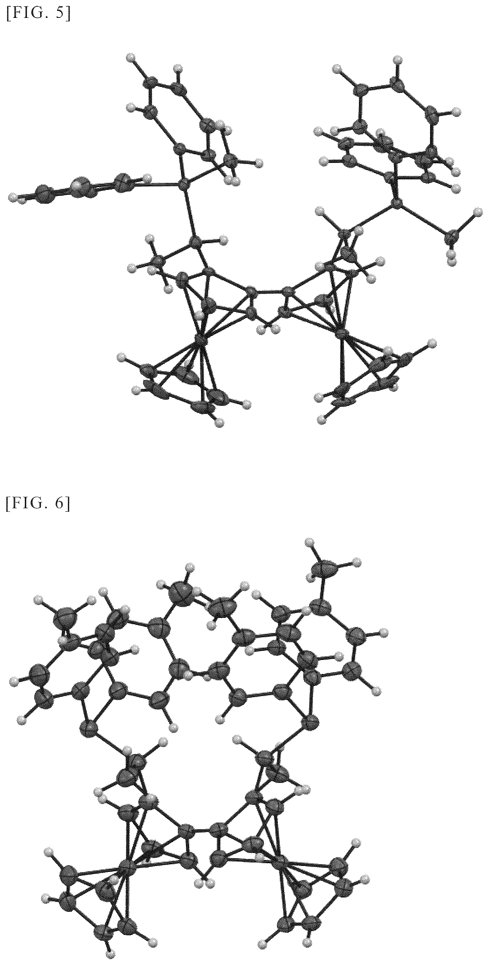

FIG. 5 shows the result of X-ray crystallography (thermal ellipsoid plot; 50% probability level) of (R_{C},R_{C},S_{P},S_{P})-Ph-TRAP·(BH₃)₂ produced in Example 5. For ease of understanding the structure of the present compound, the depiction of two deuterated chloroform molecules incorporated as crystallization solvents has been omitted from the figure. The result clearly confirmed that the present compound is indeed an enantiomer of (S_{C},S_{C},R_{P},R_{P})-Ph-TRAP·(BH₃)₂, produced in Example 4. The key parameters ensuring the reliability of the crystallographic analysis are summarized below; Chemical Formula: C₅₀H₅₀B₂Cl₆D₂Fe₂P₂; Crystal System: Orthorhombic; Space Group: P2₁2₁2₁ (#19); Lattice Constants: a = 9.4302(3) Å, b = 21.2780(6) Å, c = 24.4244(6) Å, α = β = γ = 90°; R₁: 0.0368; wR₂: 0.0794; GOF: 1.064; Flack Parameter: -0.017(3).

The results of Example 4 and Example 5 demonstrated that (S_{C},S_{C},R_{P},R_{P})-R^{P}-TRAP·(BH₃)₂ and (R_{C},R_{C},S_{P},S_{P})-R^{P}-TRAP·(BH₃)₂, which are the preferred forms of optically active R^{P}-TRAP·(BH₃)₂ (1·(BH₃)₂), can be readily and selectively produced by using the optically active form of Ugi's Amine as a starting material in the production method of the present invention.

### [Example 6] Production of (S_{C},S_{C},R_{P},R_{P})-Tol-TRAP·(BH₃)₂ (Formula 22)

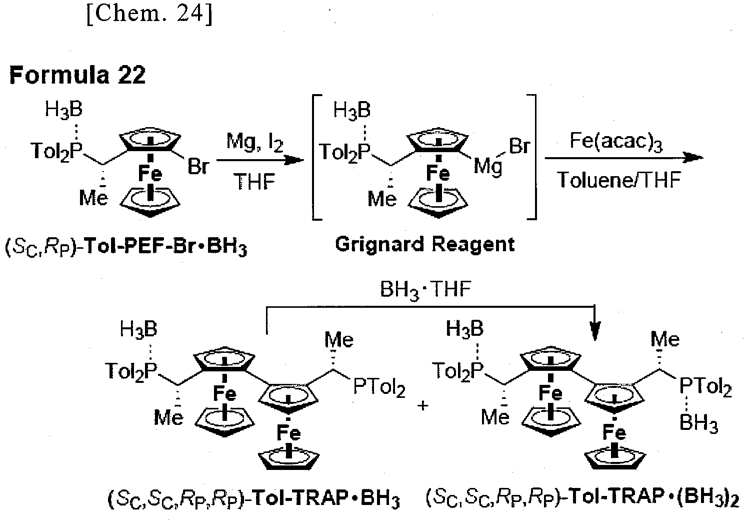

[Setup and Reaction] A 100 mL, four-necked, round-bottomed flask was charged with metallic magnesium as a magnesium source (197 mg, 8.10 mmol, 1.05 equivalents), equipped with a magnetic stirring bar, dropping funnel, Dimroth condenser, and a three-way stopcock, then evacuated and backfilled with nitrogen. Dehydrated THF (1 mL) and iodine as an activator (9.8 mg, 0.5 mol%) were sequentially added to the flask, and the mixture was then stirred gently at room temperature for 15 minutes. To the resulting white suspension, a slurry of (S_{C},R_{P})-Tol-PEF-Br·BH₃ produced in Example 2 (4.0 g, 7.71 mmol, 1.0 equivalent) in dehydrated THF (16 mL) was added in one portion. The suspension was stirred under reflux while being heated using an oil bath set at 80°C for 1 hour, affording a solution of the desired Grignard reagent (<7.71 mmol) as a deep-red liquid. A solution of Fe(acac)₃ as an oxidizing agent (2.72 g, 7.71 mmol, 1.0 equivalent) in dehydrated toluene (27 mL) was charged into the dropping funnel, and then added dropwise to the stirred reaction solution under reflux over 1 minute. The resulting mixture was further stirred under reflux for 30 minutes while being heated using an oil bath set at 100°C. NMR analysis of a portion of the obtained reaction solution revealed that the desired (S_{C},S_{C},R_{P},R_{P})-Tol-TRAP·(BH₃)₂ and (S_{C},S_{C},R_{P},R_{P})-Tol-TRAP·BH₃, resulting from the dissociation of one borane molecule from the target compound, were detected in a molar ratio of 88.2 : 11.8.

[Post-Treatment, Isolation and Purification] After cooling the reaction solution to room temperature, a THF solution of BH₃·THF as a borane source (1.10 mol/L, 1.75 mL, 1.93 mmol, 0.25 equivalents) was added under a nitrogen atmosphere. The resulting mixture was stirred at room temperature for 5 minutes, followed by the addition of 2N hydrochloric acid (20 mL, 40.0 mmol, 5 equivalents). The biphasic mixture was further stirred at room temperature and then allowed to stand to separate the aqueous layer. The organic layer was washed twice with tap water (20 mL), and then concentrated to dryness under reduced pressure using a rotary evaporator. The obtained residue was purified by silica gel column chromatography (eluent: toluene/n-hexane = 50/50 to 100/0), producing 2.37 g of the desired (S_{C},S_{C},R_{P},R_{P})-Tol-TRAP·(BH₃)₂ as an air-stable orange powder. Purity: 92.7% by weight (the main impurity was toluene); Overall Yield from (S_{C},R_{P})-Tol-PEF-Br·BH₃: 64.6%.

¹H NMR (400 MHz, CDCl₃): δ = 7.64 (dd, J = 8.0, 9.6 Hz, 4H), 7.25-7.14 (m, 8H [Target] + 4.0H [Toluene]), 6.95 (d, J = 2.0, 8.0 Hz, 4H), 4.37-4.28 (m, 12H) , 4.05 (t, J = 2.4 Hz, 2H), 4.04-3.76 (br, 4H), 2.40 (s, 6H), 2.35 (s, 2.40H [Toluene]), 2.31 (s, 6H), 1.70 (dd, J = 7.2, 16.4 Hz, 6H), 1.50-0.40 (br, 6H).
¹³C NMR (100 MHz, CDCl₃): δ = 141.56 (d, J_{P-C} = 2.6 Hz), 140.52 (d, J_{P-C} = 1.7 Hz), 133.85 (d, J_{P-C} = 8.5 Hz), 132.60 (d, J_{P-C} = 8.5 Hz), 129.39 (d, J_{P-C} = 9.2 Hz), 129.11 (d, J_{P-C} = 9.3 Hz), 126.17 (d, Jp-c = 54.0 Hz), 125.26 (d, J_{P-C} = 54.0 Hz), 90.44 (s), 84.15 (d, J_{P-C} = 5.0 Hz), 71.66 (s), 69.60 (s), 68.81 (s), 65.65 (s), 28.65 (d, J_{P-C} = 31.2 Hz), 21.51 (s), 21.40 (s), 20.82 (s).
³¹P NMR (161 MHz, CDCl₃): δ = 24.01 (br, 2P).

### [Example 7] Production of (S_{C},S_{C},R_{P},R_{P})-Cy-TRAP·(BH₃)₂ (Formula 23)

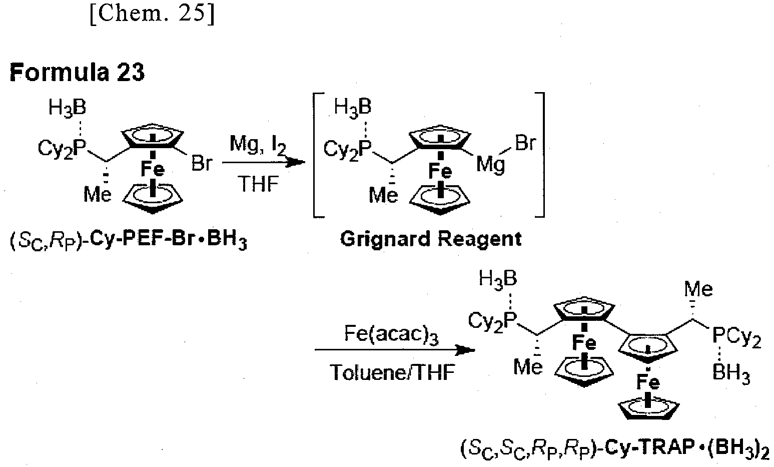

[Setup and Reaction] A 100 mL, four-necked, round-bottomed flask was charged with metallic magnesium as a magnesium source (203 mg, 8.35 mmol, 1.05 equivalents), equipped with a magnetic stirring bar, dropping funnel, Dimroth condenser, and a three-way stopcock, then evacuated and backfilled with nitrogen. Dehydrated THF (1 mL) and iodine as an activator (10.1 mg, 0.5 mol%) were sequentially added to the flask, and the mixture was then stirred gently at room temperature for 15 minutes. To the resulting white suspension, a solution of (S_{C},R_{P})-Cy-PEF-Br·BH₃ produced in Example 3 (4.0 g, 7.95 mmol, 1.0 equivalent) in dehydrated THF (16 mL) was added in one portion. The resulting mixture was stirred under reflux while being heated using an oil bath set at 80°C for 1 hour, affording a solution of the desired Grignard reagent (<7.95 mmol) as a red liquid. A solution of Fe(acac)₃ as an oxidizing agent (2.81 g, 7.95 mmol, 1.0 equivalent) in dehydrated toluene (28 mL) was charged into the dropping funnel, and then added dropwise to the stirred reaction solution under reflux over 1 minute. The resulting mixture was further stirred under reflux for 30 minutes while being heated using an oil bath set at 100°C. NMR analysis of a portion of the obtained reaction solution revealed that the electron-donating nature of the cyclohexyl group prevented dissociation of the borane molecules from the target compound, resulting in the selective formation of the desired (S_{C},S_{C},R_{P},R_{P})-Cy-TRAP·(BH₃)₂.

[Post-Treatment, Isolation, and Purification] The obtained reaction solution was allowed to cool to 40°C, followed by the addition of 2N hydrochloric acid (20 mL, 40.0 mmol, 5 equivalents). The biphasic mixture was stirred at 40°C for 30 minutes and then allowed to stand to separate the aqueous layer. The organic layer was washed twice with tap water (20 mL), and then concentrated to dryness under reduced pressure using a rotary evaporator. The obtained residue was purified by silica gel column chromatography (eluent: toluene/n-hexane = 50/50 to 100/0), producing 2.68 g of the desired (S_{C},S_{C},R_{P},R_{P})-Cy-TRAP·(BH₃)₂ as an air-stable orange powder. Purity: 93.2% by weight (the main impurity was toluene); Overall Yield from (S_{C},R_{P})-Cy-PEF-Br·BH₃: 74.3%.

¹H NMR (400 MHz, CDCl₃): δ = 7.30-7.10 (m, 3.32H [Toluene]), 4.58 (dd, J = 1.2, 2.4 Hz, 2H), 4.51 (br, 2H), 4.36 (s, 10H), 4.24 (t, J = 2.4 Hz, 2H), 2.89-2.76 (m, 2H), 2.36 (s, 1.99H [Toluene]), 2.04-1.55 (m, 22H), 1.73 (dd, J = 7.2, 13.6 Hz, 6H), 1.50-1.00 (m, 22H), 0.95-(-0.25) (br, 6H). ³¹P NMR (161 MHz, CDCl₃): δ = 34.34 (bs, 2P).

As demonstrated by the results of Examples 4 to 7, Tol-TRAP·(BH₃)₂, in which R^{P} is a 4-methylphenyl group, and Cy-TRAP·(BH₃)₂, in which R^{P} is a cyclohexyl group, were successfully produced in the same manner as Ph-TRAP·(BH₃)₂, in which R^{P} is a phenyl group. Accordingly, these results clearly demonstrated that the production method of the present invention can be applied regardless of the structure of substituent R^{P} on the phosphorus atom, in contrast to the conventional synthesis methods.

### [Example 8] Production of (S_{C},S_{C},R_{P},R_{P})-Ph-TRAP (Formula 24)

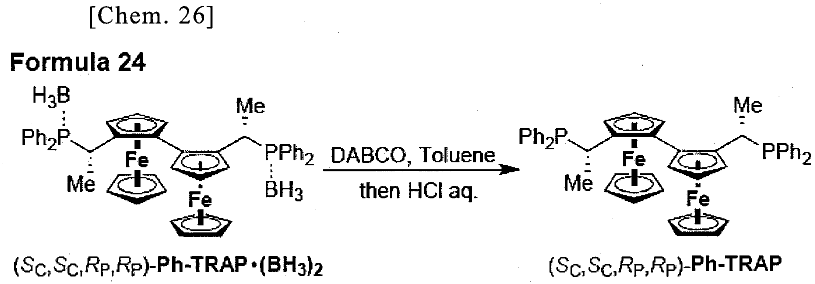

[Setup and Reaction] A 50 mL, round-bottomed flask fitted a three-way stopcock and equipped with a magnetic stirring bar and a glass stopper, was weighed, then evacuated and backfilled with nitrogen. (S_{C},S_{C},R_{P},R_{P})-Ph-TRAP·(BH₃)₂ produced in Example 4 (purity: 85.7% by weight, 300 mg, 0.313 mmol, 1.0 equivalent), dehydrated toluene (6 mL), and 1,4-diazabicyclo[2.2.2]octane as a borane-dissociating agent (DABCO; 176 mg, 1.57 mmol, 5.0 equivalents) were sequentially added to the flask. The resulting mixture in the flask was stirred for 1 hour while being heated using an oil bath set at 60°C.

[Post-Treatment and Isolation] The resulting orange reaction solution was allowed to cool to room temperature, followed by the addition of degassed 1N hydrochloric acid (6 mL). The biphasic mixture was stirred, allowed to stand, and the aqueous layer was then removed under a nitrogen atmosphere. The remaining organic layer was washed twice with degassed water (3 mL). After attaching a Claisen distillation apparatus to the reaction flask, the washed organic layer was concentrated to dryness under reduced pressure, affording an orange foamy residue. The obtained residue was triturated using a spatula under a nitrogen atmosphere while being kept in the reaction flask, and then dried by heating at 60°C under a reduced pressure of 1 Torr for 1 hour, producing 250 mg of the desired (S_{C},S_{C},R_{P},R_{P})-Ph-TRAP as an orange powder. Purity: 96.6% by weight (the main impurity was toluene); Isolated Yield: 97.0%.

¹H NMR (400 MHz, CD₂Cl₂): δ = 7.32-7.13 (m, 20H [Target] + 1.60H [Toluene]), 4.59 (dd, J = 1.2, 2.4 Hz, 2H), 4.31 (s, 10H), 4.17 (t, J = 2.4 Hz, 2H), 3.81 (dd, J = 1.2, 2.4 Hz, 2H), 3.52 (q, J = 7.2 Hz, 2H), 2.35 (s, 0.96H [Toluene]), 1.40-1.32 (m, 6H).
³¹P NMR (161 MHz, CD₂Cl₂): δ = 0.75 (s, 2P).

### [Example 9] Production of (S_{C},S_{C},R_{P},R_{P})-Tol-TRAP (Formula 25)

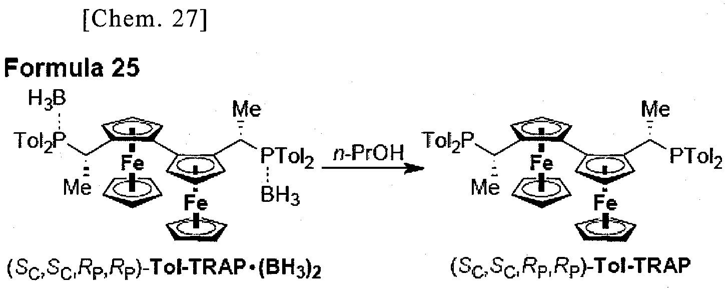

[Setup and Reaction] A 100 mL, four-necked, round-bottomed flask was charged with (S_{C},S_{C},R_{P},R_{P})-Tol-TRAP·(BH₃)₂ produced in Example 6 (purity: 92.3% by weight, 2.0 g, 2.10 mmol, 1.0 equivalent), equipped with a magnetic stirring bar, Dimroth condenser, thermometer, and a three-way stopcock, then evacuated and backfilled with nitrogen. Dehydrated n-propanol as a borane-dissociating agent (n-PrOH; 40 mL) was added to the flask, and the resulting mixture was then stirred under reflux for 6 hours while being heated using an oil bath set at 120°C.

[Post-Treatment and Isolation] After attaching a Claisen distillation apparatus to the reaction flask, the reaction solution was stirred and heated using an oil bath set at 120°C. The solvent was distilled off under nitrogen stream at atmospheric pressure, and approximately 30 mL of the solvent was recovered. The resulting orange slurry was cooled to 0°C using an ice-water bath, followed by suction filtration using a Kiriyama funnel under nitrogen stream. The filtered crystals were washed twice with dehydrated n-propanol cooled to 0°C (5 mL), and then dried by heating at 60°C under reduced pressure of 1 Torr for 3 hours, producing 1.72 g of the desired (S_{C},S_{C},R_{P},R_{P})-Tol-TRAP as an orange powder. Isolated Yield: 96.4%. Single crystals of the present compound were successfully prepared by a cooling method using n-PrOH as a solvent.

¹H NMR (400 MHz, Acetone-d₆): δ = 7.24-7.15 (m, 8H), 7.02 (d, J = 7.6 Hz, 4H), 6.97 (d, J = 7.6 Hz, 4H), 4.67 (dd, J = 1.2, 2.4 Hz, 2H), 4.33 (s, 10H), 4.11 (t, J = 2.4 Hz, 2H), 3.73 (dd, J = 1.2, 2.4 Hz, 2H), 3.55 (dd, J = 6.8, 14.0 Hz, 2H), 2.26 (s, 6H), 2.25 (s, 6H), 1.41-1.32 (m, 6H).
³¹P NMR (161 MHz, Acetone-d₆): δ = 0.29 (s, 2P).

FIG. 6 shows the result of X-ray crystallography (thermal ellipsoid plot; 50% probability level) of (S_{C},S_{C},R_{P},R_{P})-Tol-TRAP produced in Example 9. The result clearly confirmed that: 1) the absolute configuration of the present compound is indeed (S_{C},S_{C},R_{P},R_{P}); and 2) a 4-methylphenyl group is introduced as the substituent R^{P} on the phosphorus atom. The key parameters ensuring the reliability of the crystallographic analysis are summarized below; Chemical Formula: C₅₂H₅₂Fe₂P₂; Crystal System: Hexagonal; Space Group: P6₅ (#170); Lattice Constants: a = b = 10.98376(16) Å, c = 60.2095(11) Å, α = β = 90°, γ = 120°; R₁: 0.0493; wR₂: 0.1091; GOF: 1.019; Flack Parameter: -0.007 (5).

### [Example 10] Production of (S_{C},S_{C},R_{P},R_{P})-Cy-TRAP (Formula 26)

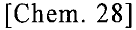

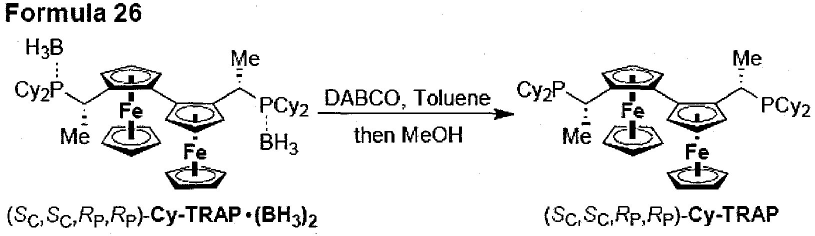

[Setup and Reaction] A 50 mL, two-necked, round-bottomed flask was charged with (S_{C},S_{C},R_{P},R_{P})-Cy-TRAP·(BH₃)₂ produced in Example 7 (purity: 93.2% by weight, 500 mg, 0.551 mmol, 1.0 equivalent), equipped with a magnetic stirring bar, Dimroth condenser, and a three-way stopcock, then evacuated and backfilled with nitrogen. Dehydrated toluene (5 mL) and DABCO as a borane-dissociating agent (370 mg, 3.31 mmol, 6.0 equivalents) were sequentially added to the flask. The resulting mixture was stirred under reflux for 3 hours while being heated using an oil bath set at 130°C.

[Post-Treatment, Isolation, and Purification] After attaching a Claisen distillation apparatus to the reaction flask, the reaction solution was stirred at 60°C while gradually reducing the pressure inside the apparatus to 15 Torr, and approximately 4 mL of solvent was recovered. After bringing the apparatus back to atmospheric pressure under nitrogen, the Claisen distillation apparatus was removed from the reaction flask. Dehydrated methanol (10 mL) was added to the concentrated solution, and the mixture was then stirred under reflux for 1 hour while being heated using an oil bath set at 80°C. The resulting orange slurry was allowed to cool to room temperature, followed by suction filtration using a Kiriyama funnel under nitrogen stream. The filtered crystals were washed twice with degassed methanol (5 mL). The wet crystals thus obtained were dried by heating at 60°C under reduced pressure of 1 Torr for 1 hour, producing 396 mg of the desired (S_{C},S_{C},R_{P},R_{P})-Cy-TRAP as an orange powder. Isolated Yield: 87.8%. Single crystals of the present compound were successfully prepared by a cooling method using n-butyl alcohol as a solvent.

¹H NMR (400 MHz, Acetone-d₆): δ = 4.52 (dd, J = 1.6, 2.4 Hz, 2H), 4.29 (s, 10H), 4.19-4.13 (m, 4H), 2.88 (q, J = 7.2 Hz, 2H), 1.89 (bd, J = 9.6 Hz, 2H), 1.83-1.45 (m, 28H), 1.35-0.97 (m, 20H).
³¹P NMR (161 MHz, Acetone-d₆): δ = 5.30 (s, 2P).

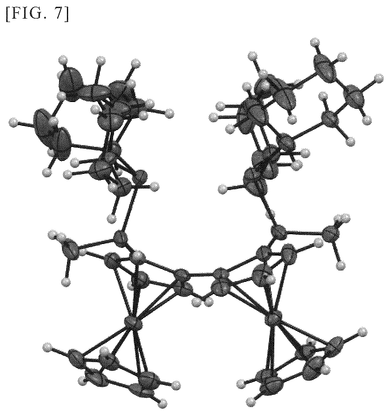

FIG. 7 shows the result of X-ray crystallography (thermal ellipsoid plot; 50% probability level) of (S_{C},S_{C},R_{P},R_{P})-Cy-TRAP produced in Example 10. Although three molecules of the present compound were found in the unit cell of the single crystal, the structure of one representative molecule is illustrated in the figure for clarity. The result clearly confirmed that: 1) the absolute configuration of the present compound is indeed (S_{C},S_{C},R_{P},R_{P}); and 2) a cyclohexyl group is introduced as the substituent R^{P} on the phosphorus atom. The key parameters ensuring the reliability of the crystallographic analysis are summarized below; Chemical Formula: C₁₄₄H₂₀₄Fe₆P₆; Crystal System: Monoclinic; Space Group: P12₁1 (#4); Lattice Constants: a = 20.6858(2) Å, b = 9.81364(12) Å, c = 32.9836(4) Å, α = γ = 90°, β = 105.4526(12)°; R₁: 0.0622; wR₂: 0.1410; GOF: 1.027; Flack Parameter: -0.004(3).

The results of the Examples 8 to 10 demonstrated that R^{P}-TRAP (1), the useful ligand for various catalytic reactions including the asymmetric hydrogenation of aromatics but previously difficult to synthesize, isolate, or purify, can be readily prepared by treating R^{P}-TRAP·(BH₃)₂ (1·(BH₃)₂) with a borane-dissociating agent as necessary.

### Industrial Applicability

R^{P}-TRAP·(BH₃)₂ (1·(BH₃)₂)), the novel diphosphine-diborane complex according to the present invention, can be readily produced without using the synthetically challenging R^{P}-TRAP (1) itself, by sequentially reacting R^{P}-PEF-X·BH₃ (2·BH₃) with a magnesium source and an oxidizing agent, if necessary, followed by treatment with a borane source. Furthermore, according to the preferred embodiment of the present invention, R^{P}-TRAP·(BH₃)₂ (1·(BH₃)₂) exhibits excellent crystallinity and air stability, facilitates isolation, purification, and long-term storage, and can be readily converted into R^{P}-TRAP by treatment with a borane-dissociating agent. Accordingly, the present invention can contribute to the practical application and further improvement in efficiency of various catalytic reactions, including the asymmetric hydrogenation of aromatics which is useful for the production of optically active cyclic compounds.

## Claims

1. A diphosphine-diborane complex represented by the following general formula (1·(BH₃)₂). 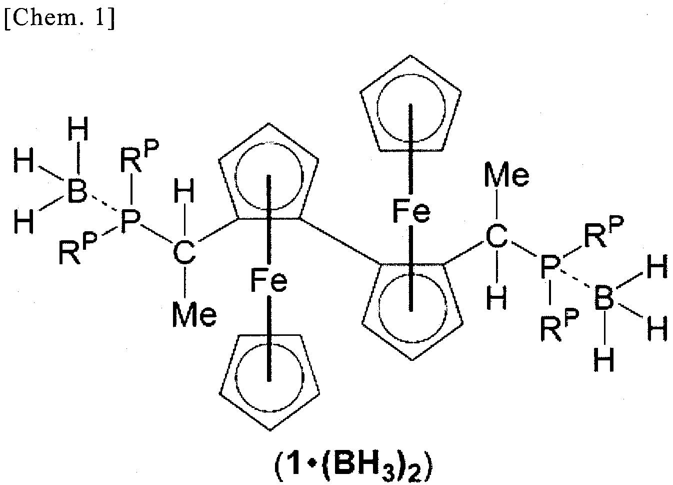 [Wherein,
a solid line represents a single bond, and a dashed line represents a coordinate bond;
H represents a hydrogen atom, B represents a boron atom, C represents a carbon atom, and P represents a phosphorus atom;
Me represents a methyl group;
Fe represents a divalent iron ion, a pentagon containing a circle represents a cyclopentadienyl anion, and a bold line represents six-electron donation of the cyclopentadienyl anion to Fe;
R^{P} represents a group selected from the group consisting of an alkyl group,
a cycloalkyl group, a heteroaryl group, and an aryl group which may have a substituent.]

2. The diphosphine-diborane complex according to claim 1, which is an optically active form.

3. The diphosphine-diborane complex according to claim 2, wherein R^{P} is selected from the group consisting of a cycloalkyl group and an aryl group which may have a substituent.

4. A production method of the diphosphine-diborane complex according to any one of claim 1 to 3, comprising a sequential reaction of a phosphine-borane complex represented by the following general formula (2·BH₃) 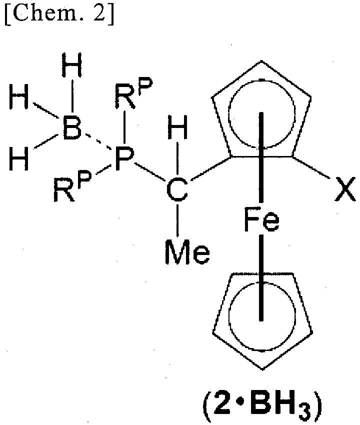 [Wherein,
a solid line represents a single bond, and a dashed line represents a coordinate bond;
H represents a hydrogen atom, B represents a boron atom, C represents a carbon atom, and P represents a phosphorus atom;
Me represents a methyl group, and X represents a halogeno group;
Fe represents a divalent iron ion, a pentagon containing a circle represents a cyclopentadienyl anion, and a bold line represents six-electron donation of the cyclopentadienyl anion to Fe;
R^{P} represents a group selected from the group consisting of an alkyl group,
a cycloalkyl group, a heteroaryl group, and an aryl group which may have a substituent.]
with a magnesium source and an oxidizing agent.

5. The production method according to claim 4, wherein the phosphine-borane complex represented by the general formula (2·BH₃) is an optically active form.

6. The production method according to claim 5, wherein R^{P} is selected from the group consisting of a cycloalkyl group and an aryl group which may have a substituent.

7. The production method according to claim 6, wherein X is a bromo group.

8. The production method according to claim 7, wherein the magnesium source is metallic magnesium.

9. The production method according to claim 8, wherein the oxidizing agent is iron(III) acetylacetonate.
